(19) Europäisches Patentamt
European Patent Office
Office européen des brevets

(11) **EP 4 787 242 A1**

(12) **EUROPEAN PATENT APPLICATION**
published in accordance with Art. 153(4) EPC

(43) Date of publication:
05.08.2026 Bulletin 2026/32

(51) International Patent Classification (IPC):
**G06N 3/08** (2023.01)

(21) Application number: 24870678.0

(22) Date of filing: 24.09.2024

(86) International application number:
PCT/CN2024/120544

(87) International publication number:
WO 2025/067134 (03.04.2025 Gazette 2025/14)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 28.09.2023 CN 202311292420

(71) Applicant: HUAWEI TECHNOLOGIES CO., LTD.
Shenzhen 518129 (CN)

(72) Inventors:
• LI, Yinchuan
Shenzhen, Guangdong 518129 (CN)
• BRUNSWIC, Léo Maxime
Shenzhen, Guangdong 518129 (CN)
• JUI, Shangling
Shenzhen, Guangdong 518129 (CN)

(74) Representative: Körber, Martin Hans
Mitscherlich PartmbB
Karlstraße 7
80333 München (DE)

(54) **GENERATIVE FLOW MODEL TRAINING METHOD AND APPARATUS, AND ACTION PREDICTION METHOD AND APPARATUS**

(57) This application provides a generative flow model training method, an action prediction method, and an apparatus, to implement training of a generative flow model with a directed acyclic graph or a cyclic graph, so as to be more widely applied to a plurality of artificial intelligence scenarios. The method includes: obtaining a plurality of state nodes in a generative flow model; then obtaining a value of a loss function based on the plurality of state nodes, where the value of the loss function includes a value obtained by fusing a value of a flow matching function and a value of a constraint function, each state node has an input flow and an output flow, the value of the flow matching function includes a value calculated based on the input flow and the output flow of each state node in the plurality of state nodes, the value of the constraint function includes a value calculated based on evaluation values corresponding to output flows of the plurality of state nodes, and a value that is of the constraint function and that corresponds to an output flow of a state node in a cyclic path is different from a value that is of the constraint function and that corresponds to an output flow of a state node in an acyclic path; and updating the generative flow model based on the value of the loss function to obtain an updated generative flow model.

```
┌─────────────────────────────────────────────┐
│ Obtain a plurality of state nodes in a        │── 301
│ generative flow model                         │
└─────────────────────────────────────────────┘
                      │
                      ▼
┌─────────────────────────────────────────────┐
│ Calculate a value of a loss function based on │── 302
│ each state node, where the loss function      │
│ includes a flow matching function and a       │
│ constraint function                           │
└─────────────────────────────────────────────┘
                      │
                      ▼
┌─────────────────────────────────────────────┐
│ Update a generative flow model based on the   │── 303
│ value of the loss function, to obtain an       │
│ updated generative flow model                 │
└─────────────────────────────────────────────┘
```

FIG. 3

**Description**

This application claims priority to Chinese Patent Application No. 202311292420.7, filed with the China National Intellectual Property Administration on September 28, 2023 and entitled "GENERATIVE FLOW MODEL TRAINING METHOD, ACTION PREDICTION METHOD, AND APPARATUS", which is incorporated herein by reference in its entirety.

## TECHNICAL FIELD

This application relates to the field of artificial intelligence, and in particular, to a generative flow model training method, an action prediction method, and an apparatus.

## BACKGROUND

A generative flow model constructs a composite structure in a sequence decision manner. A common generative flow model is usually constructed based on a directed acyclic graph, to be specific, each state node may include one or more parent nodes. This is different from a tree structure in which each state node has only one parent node. The generative flow model has a unique initial node and a plurality of destination nodes. The model starts sampling from the initial node to generate an action sequence, to complete transition between states, and ends sampling until reaching the destination node. The destination node corresponds to the generated composite structure.

However, for training of the generative flow model, an existing solution can be usually applied only to training of a model constructed based on a directed acyclic graph, and cannot implement training of a model constructed based on a cyclic graph because traffic on an edge of a cycle is accumulated infinitely.

## SUMMARY

This application provides a generative flow model training method, an action prediction method, and an apparatus, to implement training of a generative flow model with a directed acyclic graph or a cyclic graph, so as to be more widely applied to a plurality of artificial intelligence scenarios.

In view of this, according to a first aspect, this application provides a generative flow model training method. The method includes: first, obtaining a plurality of state nodes in a generative flow model, where the plurality of state nodes may represent a state of an agent, and an action may be executed for transition between the state nodes; then obtaining a value of a loss function based on the plurality of state nodes, where the value of the loss function includes a value obtained by fusing a value of a flow matching function and a value of a constraint function, the plurality of state nodes in the generative flow model may be connected to each other through a flow, the flow may represent a probability that each action is selected during transition from a current state node to a next state node, each state node has an input flow and an output flow, the value of the flow matching function includes a value calculated based on an input flow and an output flow of each state node in the plurality of state nodes, the value of the constraint function includes a value calculated based on evaluation values corresponding to output flows of the plurality of state nodes, a value that is of the constraint function and that corresponds to an output flow of a state node in a cyclic path is different from a value that is of the constraint function and that corresponds to an output flow of a state node in an acyclic path, the cyclic path includes a path that forms a cycle between the plurality of state nodes, the acyclic path is a path that does not include a cycle and that is formed between the plurality of state nodes, and a start point and an end point of a path formed between the plurality of states is usually determined based on a task to be executed by the generative flow model; and then updating the generative flow model based on the value of the loss function, to obtain an updated generative flow model.

In an implementation of this application, a constraint item, that is, a constraint function, is set in the loss function, and the constraint function is used to constrain an output value of the loss function, to constrain an overall output of the generative flow model to converge to an acyclic flow. For example, a reward value set for a cyclic flow may be added to a loss function part, so that a loss of the cyclic flow is greater than 0, to constrain a reward for the cyclic flow to converge to a value close to 0, and traffic of a cyclic part is closer to 0. This reduces impact of a cycle on the model output. In this way, the method provided in this application can be applied to an acyclic generative flow model and a cyclic generative flow model, and therefore can be applied to training of the generative flow model in more scenarios, and has a stronger generalization capability.

In a possible implementation, obtaining the value of the loss function based on the plurality of state nodes may include: determining, based on an output result of a policy network, probability distribution corresponding to the plurality of state nodes, where the probability distribution is used to determine a probability that at least one to-be-selected action is selected when a next action is selected based on each state node; and calculating the value of the loss function based on the probability distribution and the plurality of state nodes.

That is, the method provided in this application may be applied to reinforcement learning, and the probability distribution corresponding to the state nodes may be learned via the policy network. The training process may be one iteration process in iterative training. In a current iteration process, probability distribution may be determined based on an output of the policy network after previous training, then, a possible transition path between the plurality of state nodes in a generative flow network is determined based on the probability distribution, and the value of the loss function is calculated, to update the policy network based on the value of the loss function, and further update the generative flow network based on the output result of the policy network.

In a possible implementation, determining, via the policy network, the probability distribution corresponding to the plurality of state nodes may include: outputting, via the policy network, a measure value, in a measure space, of a flow transmitted between the plurality of state nodes, where the measure value represents density, in the measure space, of the flow transmitted between the plurality of state nodes; and then determining the probability distribution based on the measure value between the plurality of state nodes, that is, a probability that each to-be-selected action is correspondingly selected when an action is selected during state transition between the state nodes. In an implementation of this application, there is a correspondence between the density in the measure space and the probability. Therefore, the probability that each action is selected during state transition can be determined based on the measure value output via the policy network, to more intuitively measure the input flow and the output flow of each state node and corresponding probabilities in the measure space.

In a possible implementation, calculating the value of the loss function based on the probability distribution and the plurality of state nodes may include: determining at least one path between the plurality of state nodes based on the probability distribution, where a start point and an end point of each path are determined based on a task that needs to be executed by the generative flow model. For example, in an autonomous driving agent, a state node may represent a current autonomous driving state (for example, a vehicle speed of 5 km/h), that is, a start point of a path, and an end point may be a target driving state (for example, increasing the vehicle speed to 60 km/h) in which autonomous driving needs to be performed. An action of transition between state nodes may include acceleration ranges [5, 15], [15, 20], and the like. The value of the loss function is calculated based on the at least one path and the input flow and the output flow of each state node.

In an implementation of this application, after the probability distribution is determined in the measure space, one or more possible state transition paths may be determined based on the probability distribution, so that the value of the loss function is calculated based on the one or more possible state transition paths, to update the generative flow network.

In a possible implementation, the constraint function may include a function formed based on a norm of an edge flow matrix, the edge flow matrix is a matrix formed by an edge flow between intermediate state nodes in the plurality of state nodes, and the edge flow is a flow transmitted between any pair of nodes in the plurality of state nodes. In an implementation of this application, the edge flow may be constrained based on the norm of the edge flow matrix. This can shorten a sampling time, and accelerate model convergence.

In a possible implementation, the loss function includes a function formed based on divergence between the flow matching function and the constraint function. Therefore, in this implementation of this application, the loss value is calculated based on the generalized divergence, to obtain a more stable loss value. This can accelerate model convergence, and improve training efficiency.

In a possible implementation, the loss function includes a function based on a node flow matching loss, a trajectory balancing loss, a density loss of a node in a continuous space, or a density loss of a trajectory in a continuous space. Therefore, in this implementation of this application, the loss value may be calculated from a plurality of dimensions. In this way, generalization is strong.

According to a second aspect, this application provides an action prediction method, including: obtaining state information, where the state information indicates a current state of an agent; and obtaining, based on the state information as an input of a generative flow model, a probability value corresponding to at least one action, where the probability value corresponding to the at least one action is used to determine an action executed by the agent, and the generative model is obtained through training by using the method in any one of the first aspect or the optional implementations of the first aspect.

For effect achieved in the second aspect, refer to the descriptions in any one of the first aspect or the optional implementations of the first aspect. Details are not described herein again.

According to a third aspect, this application provides an action prediction method, including: first, obtaining a plurality of state nodes in a generative flow model; then obtaining a measure value of the plurality of state nodes, where the measure value indicates density, in a measure space, of a path formed between the plurality of state nodes during state transition, the measure value is used to determine probability distribution, and the probability distribution is used to determine a probability that at least one to-be-selected action is selected when a next action is selected based on each state node in the plurality of state nodes; and determining at least one path based on the measure value of the plurality of state nodes, where the at least one path includes a path formed between the plurality of state nodes during transition based on an action selected based on the probability distribution, and a start point and an end point of the at least one path are determined based on a task to be executed by the generative flow model.

Therefore, in this implementation of this application, action prediction may be performed in the measurable measure space, to predict a more accurate next action.

In a possible implementation, the method may further include: calculating a loss value based on the at least one path; and updating the generative flow model based on the loss value, to obtain an updated generative flow model. Therefore, the method for performing action prediction in the measure space provided in this application may further be applied to a training phase, and has a strong generalization capability.

According to a fourth aspect, an embodiment of this application provides a generative flow model training apparatus. The apparatus includes:

an obtaining module, configured to obtain a plurality of state nodes in a generative flow model;

a calculation module, configured to obtain a value of a loss function based on the plurality of state nodes, where the value of the loss function includes a value obtained by fusing a value of a flow matching function and a value of a constraint function, the value of the flow matching function includes a value calculated based on an input flow and an output flow of each state node in the plurality of state nodes, the value of the constraint function includes a value calculated based on evaluation values corresponding to output flows of the plurality of state nodes, a value that is of the constraint function and that corresponds to an output flow in a cyclic path is different from a value that is of the constraint function and that corresponds to an output flow in an acyclic path, the cyclic path includes a path that forms a cycle between the state nodes, and the acyclic path is a path that does not include a cycle and that is formed between the state nodes; and

an updating module, configured to update the generative flow model based on the value of the loss function, to obtain an updated generative flow model.

For effect achieved in any one of the fourth aspect and the optional implementations of the fourth aspect, refer to the descriptions in any one of the first aspect or the optional implementations of the first aspect. Details are not described herein again.

In a possible implementation, the calculation module is specifically configured to: determine, via a policy network, probability distribution corresponding to the plurality of state nodes, where the probability distribution is used to determine a probability that at least one to-be-selected action is selected when a next action is selected based on each state node; and calculate the value of the loss function based on the probability distribution and the plurality of state nodes.

In a possible implementation, the calculation module is specifically configured to: output, via the policy network, a measure value, in a measure space, of a flow transmitted between the plurality of state nodes, where the measure value represents density, in the measure space, of the flow transmitted between the plurality of state nodes; and determine the probability distribution based on the measure value between the plurality of state nodes.

In a possible implementation, the calculation module is specifically configured to: determine at least one path between the plurality of state nodes based on the probability distribution, where a start point and an end point of the at least one path are determined based on a task to be executed by the generative flow model; and calculate the value of the loss function based on the at least one path and the input flow and the output flow of each state node.

In a possible implementation, the constraint function includes a function formed based on a norm of an edge flow matrix, the edge flow matrix is a matrix formed by an edge flow between intermediate state nodes in the plurality of state nodes, and the edge flow is a flow transmitted between any pair of nodes in the plurality of state nodes.

In a possible implementation, the loss function includes a function formed based on divergence between the flow matching function and the constraint function.

In a possible implementation, the loss function includes a function based on a node flow matching loss, a trajectory balancing loss, a density loss of a node in a continuous space, or a density loss of a trajectory in a continuous space.

According to a fifth aspect, this application provides an action prediction apparatus, including:

an obtaining module, configured to obtain state information, where the state information indicates a current state of an agent; and

a generation module, configured to obtain, based on the state information as an input of a generative flow model, a probability value corresponding to at least one action, where the probability value corresponding to the at least one action is used to determine an action executed by the agent, where

the generative model is obtained through training by using the method in any one of the first aspect or the optional implementations of the first aspect.

According to a sixth aspect, this application provides an action prediction apparatus, including:

an obtaining module, configured to obtain a plurality of state nodes in a generative flow model;

a measurement module, configured to obtain a measure value of the plurality of state nodes, where the measure value indicates density, in a measure space, of a path formed between the plurality of state nodes during state transition, the measure value is used to determine probability distribution, and the probability distribution is used to determine a probability that at least one to-be-selected action is selected when a next action is selected based on each state node in the plurality of state nodes; and

a determining module, configured to determine at least one path based on the measure value of the plurality of state nodes, where the at least one path includes a path formed between the plurality of state nodes during transition based on an action selected based on the probability distribution, and a start point and an end point of the at least one path are determined based on a task to be executed by the generative flow model.

In a possible implementation, the apparatus further includes an updating module, configured to: calculate a loss value based on the at least one path; and update the generative flow model based on the loss value, to obtain an updated generative flow model.

According to a seventh aspect, an embodiment of this application provides a generative flow model training apparatus, including a processor and a memory. The processor and the memory are interconnected through a line, and the processor invokes program code in the memory to perform a processing-related function in the generative flow model training method shown in any implementation of the first aspect. Optionally, a data quantization apparatus may be a chip.

According to an eighth aspect, an embodiment of this application provides an action prediction apparatus, including a processor and a memory. The processor and the memory are interconnected through a line, and the processor invokes program code in the memory to perform a processing-related function in the action prediction method shown in any implementation of the second aspect. Optionally, a data quantization apparatus may be a chip.

According to a ninth aspect, an embodiment of this application provides an action prediction apparatus, including a processor and a memory. The processor and the memory are interconnected through a line, and the processor invokes program code in the memory to perform a processing-related function in the action prediction method shown in any implementation of the third aspect. Optionally, a data quantization apparatus may be a chip.

According to a tenth aspect, an embodiment of this application provides a digital processing chip or a chip. The chip includes a processing unit and a communication interface. The processing unit obtains program instructions through the communication interface, the program instructions are executed by the processing unit, and the processing unit is configured to perform a processing-related function in any optional implementation of the first aspect to the third aspect.

According to an eleventh aspect, an embodiment of this application provides a computer-readable storage medium, including instructions. When the instructions are run on a computer, the computer is enabled to perform the method in any optional implementation of the first aspect to the third aspect.

According to a twelfth aspect, an embodiment of this application provides a computer program product including a computer program/instructions. When the computer program/instructions is/are executed by a processor, the processor is enabled to perform the method in any optional implementation of the first aspect to the third aspect.

## BRIEF DESCRIPTION OF DRAWINGS

FIG. 1 is a schematic flowchart of reinforcement learning according to this application;
FIG. 2 is a diagram of a structure of a generative flow model according to this application;
FIG. 3 is a schematic flowchart of a generative flow model training method according to this application;
FIG. 4 is a schematic flowchart of another generative flow model training method according to this application;
FIG. 5 is a schematic flowchart of another generative flow model training method according to this application;
FIG. 6 is a schematic flowchart of an action prediction method according to this application;
FIG. 7 is a schematic flowchart of another action prediction method according to this application;
FIG. 8 is a diagram of a structure of a generative flow model training apparatus according to this application;
FIG. 9 is a diagram of a structure of an action prediction apparatus according to this application;
FIG. 10 is a diagram of a structure of another action prediction apparatus according to this application;
FIG. 11 is a diagram of a structure of another generative flow model training apparatus according to this application;
FIG. 12 is a diagram of a structure of another action prediction apparatus according to this application; and
FIG. 13 is a diagram of a structure of a chip according to this application.

## DESCRIPTION OF EMBODIMENTS

The following describes technical solutions in embodiments of this application with reference to accompanying drawings in embodiments of this application. It is clear that the described embodiments are merely a part rather than all of embodiments of this application. All other embodiments obtained by a person skilled in the art based on embodiments of this application without creative efforts shall fall within the protection scope of this application.

First, methods provided in this application relate to concepts related to a neural network. For ease of understanding, the following describes the related concepts of the neural network.

(1) Neural network

The neural network may include a neuron. The neuron may be an operation unit that uses $x_s$ as an input. An output of the operation unit may be as follows:

$$h_{W,b}(x) = f(W^T x) = f(\sum_{s=1}^{n} W_s x_s + b).$$

Herein, s=1, 2, ..., or n, n is a natural number greater than 1, $W_s$ is a weight of $x_s$, and $b$ is a bias of the neuron. $f$ is an activation function (activation function) of the neuron, and is used to perform non-linear transformation on a feature obtained in the neural network, to convert an input signal in the neuron into an output signal. The output signal of the activation function may be used as an input of a next convolutional layer. The activation function may be a sigmoid function. The neural network is a network formed by connecting a plurality of single neurons together. To be specific, an output of a neuron may be an input of another neuron. An input of each neuron may be connected to a local receptive field of a previous layer to extract a feature of the local receptive field. The local receptive field may be a region including several neurons.

(2) Convolutional neural network

The convolutional neural network (convolutional neuron network, CNN) is a deep neural network with a convolutional structure. The convolutional neural network includes a feature extractor that includes a convolutional layer and a sampling sublayer, and the feature extractor may be considered as a filter. The convolutional layer is a neuron layer that is in the convolutional neural network and at which convolution processing is performed on an input signal. At the convolutional layer of the convolutional neural network, one neuron may be connected only to some neurons at a neighboring layer. One convolutional layer usually includes a plurality of feature maps, and each feature map may include some neurons that are in a rectangular arrangement. Neurons in a same feature map share a weight, and the weight shared herein is a convolution kernel. Weight sharing may be understood as that a feature extraction manner is irrelevant to a location. The convolution kernel may be initialized in a form of a matrix of a random size. In a training process of the convolutional neural network, a reasonable weight may be obtained for the convolution kernel through learning. In addition, benefits directly brought by weight sharing are that connections between layers of the convolutional neural network are reduced, and an overfitting risk is reduced.

(3) Loss function

In a process of training a deep neural network, because it is expected that an output of the deep neural network is as close as possible to a value that actually needs to be predicted, a current predicted value of the network may be compared with an actually expected target value, and then a weight vector at each layer of the neural network is updated based on a difference between the current predicted value and the target value (certainly, there is usually an initialization process before first updating, to be specific, a parameter is preconfigured for each layer of the deep neural network). For example, if the predicted value of the network is large, the weight vector is adjusted to decrease the predicted value, and adjustment is continuously performed, until the deep neural network can predict the actually expected target value or a value that more approximates the actually expected target value. Therefore, "how to obtain, through comparison, the difference between the predicted value and the target value" needs to be predefined. This is a loss function (loss function) or an objective function (objective function). The loss function and the objective function are important equations used to measure the difference between the predicted value and the target value. The loss function is used as an example. A higher output value (loss) of the loss function indicates a larger difference. Therefore, training of the deep neural network is a process of minimizing the loss as much as possible. The loss function may generally include a mean square error loss function, a cross entropy loss function, a logarithm loss function, an exponential loss function, and the like. For example, a mean square error may be used as a loss function, and is defined as $mse = \frac{1}{N} \sum_{n=1}^{N} (y_n - \hat{y}_n)^2$. Specifically, a specific loss function may be selected based on an actual application scenario.

(4) Graph (Graph)

The graph is a data structure that includes at least one vertex and at least one edge. In some scenarios, the vertex on the graph may be mapped to an entity, and the edge on the graph may be mapped to a relationship between entities. The graph may be a directed graph or an undirected graph. Certainly, the graph may further include other data other than the vertex and the edge, such as a label of the vertex and a label of the edge.

(5) Directed acyclic graph (directed acyclic graph, DAG)

The directed acyclic graph is an acyclic directed graph. For example, in a non-directed acyclic graph, a cycle is formed by starting from a point A to B and returning to A through C. If a direction of an edge from C to A is changed to from A to C, the graph becomes a directed acyclic graph. A quantity of spanning trees of the directed acyclic graph is equal to an indegree product of nodes with non-zero indegrees.

(6) Cyclic graph

The cyclic graph is similar to the DAG, and a difference lies in that the cyclic graph may include a cyclic structure formed by connecting a plurality of nodes.

(7) Reinforcement learning

Reinforcement learning (reinforcement learning, RL), also referred to as re-encouragement learning, evaluation learning, or enhancement learning, is used to describe and resolve a problem of how an agent (agent) learns a policy to maximize return or achieve a specific objective in a process of interacting with an environment.

In reinforcement learning, the agent (agent) learns in a "trial-and-error" manner, and a behavior of the agent is guided based on a reward (reward) obtained through interaction with the environment with an action (action). A goal is to enable the agent to obtain maximum rewards. Generally, reinforcement learning may not require a training dataset, or may generate training data through interaction with the environment. In reinforcement learning, a reinforcement signal (that is, a reward) provided by the environment evaluates a generated action rather than telling a reinforcement learning system how to generate a correct action. As the external environment provides little information, the agent needs to learn from its experience. In this way, the agent obtains knowledge from an action-evaluation (that is, a reward) environment and improves an action solution to adapt to the environment.

It may be understood that reinforcement learning is a machine learning paradigm used to maximize return or complete a specific machine learning task according to a learning policy in the process in which the agent interacts with the environment. The agent learns in the trial-and-error manner, obtains the reward through interaction with the environment, and uses the reward to guide action selection. The agent finds an optimal policy in a current state, and selects a proper action according to the policy to maximize a benefit.

In addition, there are two extremely important concepts in reinforcement learning tasks: exploitation (exploit) and exploration (explore), which are sometimes called utilization and probe respectively. In reinforcement learning, exploitation means that the agent selects an optimal action from all known 2-tuple (state-action) distribution based on a principle of maximizing action value. In other words, the agent selects from known actions, and this is referred to as exploitation (or utilization). Exploration means that the agent selects another unknown action outside the known 2-tuple (state-action) distribution.

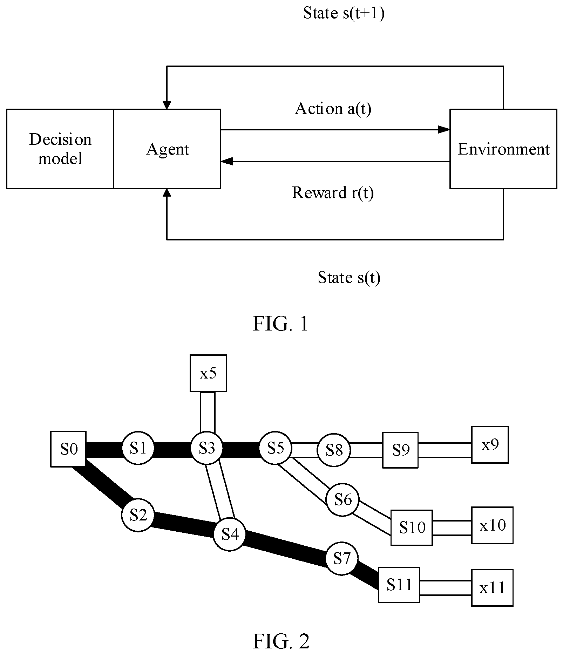

For example, FIG. 1 is a diagram of a training process of reinforcement learning. As shown in FIG. 1, reinforcement learning mainly includes a plurality of elements: an agent (agent), an environment (environment), a state (state), an action (action), and a reward (reward). An input of the agent is referred to as a state, and an output of the agent is referred to as an action.

For example, the training process of reinforcement learning is as follows: The agent interacts with the environment for a plurality of times to obtain a state, an action, and a reward in each time of interaction. The plurality of groups of (states, actions, rewards, and next-moment states) are used as training data to train the agent once. A next round of training is performed on the agent according to the foregoing process until a convergence condition is met.

A process of obtaining an action, a state, and a reward in one time of interaction is shown in FIG. 1. A current state s(t) of the environment is input into the agent, to obtain an action a(t) output by the agent. A reward r(t) in the current interaction is calculated based on a related performance indicator of the environment under the action a(t). In this case, the state s(t), the action a(t), and the reward r(t) in the current interaction are obtained. The state s(t), the action a(t), and the reward r(t) in the current interaction are recorded for subsequent training of the agent. A next state s(t+1) of the environment under the action a(t) is further recorded to implement next interaction between the agent and the environment.

An agent (agent) is an entity that can think and interact with the environment. For example, the agent may be a computer system in a specific environment or a part of the computer system. The agent may autonomously complete, according to an existing indication or through autonomous learning, a specified goal in an environment in which the agent is located based on perception of the agent on the environment and through communication and collaboration with another agent. The agent may be software or an entity that combines software and hardware. In a federated learning process in this application, the agent may be a client.

A decision model is a behavior rule used by the agent in reinforcement learning. For example, in a learning process, an action may be output based on a state, and an environment is explored based on the action to update the state. Updating of the decision model depends on a policy gradient (PG). The decision model is usually a Q network or a policy network, for example, a multilayer perceptron (multilayer perceptron, MLP) or another deep reinforcement learning model (deep Q network, DQN).

A Markov decision process (Markov decision process, MDP) is a common model of reinforcement learning, and is a mathematical model for analyzing a decision-making problem based on discrete-time random control. It is assumed that an environment has a Markov property (conditional probability distribution of a future state of the environment depends only on a current state). A decision maker periodically observes a state of the environment, makes a decision (which may also be referred to as an action) based on the current state of the environment, and obtains a next state and a reward after interacting with the environment. In other words, at each moment t, a state s(t) observed by the decision maker transits to a next state s(t+1) under influence of an action a(t) that is executed, and a reward r(t) is fed back. s(t) represents a state function, a(t) represents an action function, r(t) represents the reward, and t represents time.

A Markov chain is a random process of transition from one state to another state. For a state s, a next state depends on the current state and is independent of a state before the current state, that is, s(t+1) is related only to s(t). Therefore, when state transition is performed based on the Markov chain, a state transition path of a cyclic structure may appear. In the method provided in this application, a path formed by a plurality of state nodes may include a path formed based on the Markov chain.

In a state transition matrix, in a Markov decision process, each state transits to a next state at a specific probability, and a probability of transition between a plurality of state nodes may be represented as a matrix. For example, in the method provided in this application, a probability of transition between states can be learned via a policy network, that is, the state transition matrix may be output via the policy network, and learning can be completed after the transition probability converges.

In a forward probability and a backward probability, because one observable variable is generated in each state, t observable variables are generated at a moment t. A probability of being in a state i at the moment t is the forward probability $\alpha$. At the moment t and in a state s, a probability of being at an observable variable O is the backward probability $\beta$.

(8) Measure (measure) space

It is assumed that (X, R) is a measurable space and $\mu$ is a measure on R. In this case, (X, R, $\mu$) is referred to as the measure space. A vector in the measure space is usually non-negative, normative, and additive. In the following embodiments of this application, a state node may be projected into a measurable space, and a measure in the measure space may be used to measure a flow transmitted between state nodes.

(9) Generative model

The generative model is a model that can randomly generate observation data, especially when some hidden parameters are given. The generative model specifies joint probability distribution for an observed value and a labeled data sequence. In machine learning, the generative model may be directly used for data modeling (for example, performing data sampling based on a probability density function of a variable), or may be used to establish conditional probability distribution between variables. The conditional probability distribution may be formed by the generative model according to Bayesian theorem.

(10) Generative flow model

The generative flow model (or referred to as a flow-based generative flow model or a generative flow model) is a flow model in which sampling is performed in a sequence decision manner and a composite structure is constructed, so that a probability of generating a structure is proportional to a reward value of the structure. The generative flow model constructs the composite structure in the sequence decision manner. A flow model is constructed based on a directed acyclic graph, to be specific, each state node has a plurality of parent nodes. This is different from a tree structure in which each state node has only one parent node. The directed acyclic graph has a unique initial node and a plurality of destination nodes. The generative flow model starts sampling from the initial node of the directed acyclic graph to generate an action sequence, to complete transition between states, and ends sampling until reaching the destination node. The destination node has a corresponding composite structure.

The initial node may include output traffic, an intermediate node may include input traffic and output traffic (or a reward value), and the destination node may include input traffic and a reward value. If the flow model is considered as a water pipe, a water flow rate of the initial node is a total inflow of the model, and a sum of water flow rates of all the destination nodes is a total outflow of the model. For each intermediate node, an inflow is equal to an outflow. An inflow and an outflow of a node are predicted via a neural network (that is, a generative flow may be specifically constructed via the neural network). A flow matching constraint is used as a target function for optimization, so that the generative flow model can learn a policy (that is, optimize the neural network). In this way, a probability of generating a composite structure through sampling is proportional to a reward value of the composite structure, and a structure with a higher reward value is more likely to be sampled. In this way, the generative flow model can sample a series of structures with high reward values.

For an example diagram of the generative flow model, refer to FIG. 2. As shown in FIG. 2, $s_i$ represents a state, $x_j$ represents a composite structure, and $s_0$ is an initial node. $s_3$, $s_9$, $s_{10}$, and $s_{11}$ are destination nodes, because they correspond to composite structures $x_5$, $x_9$, $x_{10}$, and $x_{11}$. Each state node in FIG. 2 may be considered as a state of an agent, an edge between state nodes may be considered as an action executed for transition from a previous state node to a next state node, and a value of the edge between the state nodes (that is, an outflow/inflow of the node) represents a probability of executing the action.

However, in some existing generative flow model construction or training processes, only a generative flow model with a directed acyclic graph structure can be usually trained. For a generative flow model that may have a cyclic graph, an edge flow may be accumulated infinitely, resulting in low convergence efficiency of model training or even no convergence. In addition, a model structure may be unstable.

Therefore, this application provides a generative flow model training method, to implement a generative flow model based on a graph structure and implement training of a generative flow model with a directed acyclic graph or a cyclic graph, so as to be more widely applied to a plurality of artificial intelligence scenarios.

The flow model shown in FIG. 2 is used as an example. Each state node in FIG. 2 may be considered as the state of the agent, the edge between the state nodes may be considered as the action executed for transition from the previous state node to the next state node, and the value of the edge between the state nodes (that is, the outflow/inflow of the node) represents the probability of executing the action. In a generative flow model training process, a loss function is obtained mainly by constraining an inflow and an outflow that are obtained by the generative flow model for a state node, in other words, the inflow of the state node is equal to the outflow of the state node.

Simply, for any state node, the state node may have a plurality of parent nodes and a plurality of child nodes, values of edges between the state node and the plurality of parent nodes are inflows corresponding to the state node, and values of edges between the state node and the plurality of child nodes are outflows corresponding to the state node. In the method provided in this application, in a training phase, a flow matching function and a constraint function are set in the loss function. The flow matching function is used to calculate a loss value between an inflow and an outflow of each state node. The constraint function is a function for performing extension calculation based on an output flow of each state node, for example, calculating an evaluation value, a reward value, or a penalty value based on the output flow. Therefore, even if there is a cyclic path in the generative flow model, impact of the cyclic path on an output result of the generative flow model can be reduced via a constraint item, to avoid an infinite cyclic flow formed in a generative flow, and implement training of a cyclic generative flow model.

Specifically, the generative flow model training method provided in embodiments of this application may be applied to an electronic device. For example, the electronic device may be a server, a robot, a smartphone (mobile phone), a personal computer (personal computer, PC), a notebook computer, a wireless electronic device in industrial control (industrial control), a wireless electronic device in self-driving (self-driving), a wireless electronic device in a smart grid (smart grid), a wireless electronic device in logistics and warehousing, a wireless electronic device in transportation safety (transportation safety), or a wireless electronic device in a smart city (smart city).

The foregoing describes a device to which the generative flow model training method provided in embodiments of this application is applied. The following describes a scenario to which the generative flow model training method provided in embodiments of this application is applied. Specifically, the generative flow model training method provided in embodiments of this application may be applied to training a generative flow model that executes one or more tasks. The task to be executed by the generative flow model may include but is not limited to an autonomous driving task, a robot control task, a game character control task, a recommendation task, a parameter optimization task, a molecular structure search or construction task, or a protein structure search task.

For example, in the autonomous driving task, each intelligent vehicle may be considered as an agent, and each intelligent vehicle can obtain information about the ego vehicle and information about another intelligent vehicle via a sensor or the like, for example, information such as a location of the ego vehicle on a road, a speed of the ego vehicle, a distance between the another intelligent vehicle and the ego vehicle, and a speed and an acceleration of the another intelligent vehicle. The information about the ego vehicle and the information about the another intelligent vehicle that are obtained by each intelligent vehicle may be considered as an observed value of the intelligent vehicle for an environment state, and may also be referred to as state information corresponding to a state of the intelligent vehicle. For the intelligent vehicle, the intelligent vehicle needs to determine, based on the state of the intelligent vehicle, an action executed by the intelligent vehicle, for example, an action like acceleration, deceleration, or lane change, so that positive feedback obtained by the intelligent vehicle from an environment is as high as possible, in other words, a safety coefficient of the intelligent vehicle is as high as possible, or a travel time for the intelligent vehicle to reach a destination is as short as possible. An action space in which an action that can be executed by the intelligent vehicle is included is usually continuous. For example, the action space specifically includes accelerating to 80 km/h to 200 km/h, decelerating to 0 km/h to 80 km/h, and adjusting a turning angle to 0 degrees to 40 degrees. The intelligent vehicle may select, based on an actual application scenario, to execute any action in the action space.

For another example, in a robot control task, each robot is considered as an agent, and a plurality of robots may collaborate to complete a specific task. For example, in the logistics and warehousing field, a plurality of robots collaborate to move specified goods to a specified place. Similarly, each robot can obtain, via a sensor or the like, information about the robot and information about another robot, for example, information such as a speed of the robot, a rotation angle of a mechanical arm of the robot, a distance between the another robot and the robot, an action currently executed by the another robot, and a running speed of the another robot. The information about the another robot obtained by each robot may be considered as an observed value of the robot for an environment state. For the robot, the robot needs to determine, based on the observed value for the environment state, an action executed by the robot, for example, an action like a movement direction, a rotation angle, and a motion pause, so that positive feedback obtained by the robot from an environment is as high as possible, that is, the robot completes a moving task within an as short as possible time on a premise of avoiding collision. Similarly, an action space in which an action that can be executed by the robot is included is continuous. For example, the action space specifically includes adjusting a movement direction to a direction of 0 degrees to 360 degrees and adjusting an arm rotation angle to 0 degrees to 180 degrees.

For another example, in a game character control task, each character unit is considered as an agent, and a plurality of character units may collaborate to complete a specific battle task. For example, in a large instant strategy game, a plurality of character units of a same race jointly execute a task of battling with a character unit of another race. Each character unit can obtain information about the character unit and information about another character unit of the same race, for example, information such as a location of the character unit, and an attack target, an attack manner, and a movement direction that are of the character unit and the another character unit. The information about the character unit and the information about the another character unit that are obtained by each character unit may be considered as an observed value of the character unit for an environment state. Each character unit in the game needs to determine, based on the observed value for the environment state, an action executed by the character unit, for example, an action like switching an attack target, changing an attack manner, or changing a movement route, so that positive feedback obtained by the character unit from an environment is as high as possible, that is, the character unit can complete the battle task with an as small as possible loss.

For a recommendation task, the recommendation task may be specifically, for example, a social recommendation task, a commodity recommendation task, or an advertisement recommendation task. The commodity recommendation task is used as an example. A server that recommends a commodity to a user may be considered as an agent. A case in which the user taps to browse commodity information recommended by the server, the user stops commodity information recommended by the server, or the like may be considered as a state of a recommendation environment in which the agent is located. That the server recommends a specific piece of commodity information to the user may be considered as an action executed by the server. Because commodities that can be recommended by the server are massive, an action space in which the action that can be executed by the server is included is continuous, that is, the action space may be considered as including infinite actions. For the server, the server needs to determine, based on an observed value of the state of the recommendation environment, an action executed by the server, for example, an action like recommending specific types of commodities or recommending commodities within specific price ranges, so that positive feedback obtained by the server from the recommendation environment is as high as possible, that is, the user taps to browse the commodity information recommended by the server as frequently as possible.

For a parameter optimization task, the parameter optimization task may be, for example, optimizing a hyperparameter of a neural network in a training process or optimizing a communication parameter in a wireless network scenario. Optimizing the hyperparameter of the neural network in the training process is used as an example. A server used to train the neural network may be considered as an agent. Performance that is of the neural network and that is obtained after the hyperparameter is adjusted in the training process may be considered as a state of a parameter optimization environment in which the agent is located. A manner in which the server adjusts the hyperparameter of the neural network in the training process may be considered as an action executed by the server. Because the hyperparameter may usually be a value within one or more ranges, an action space in which the action that can be executed by the server is included is also continuous, that is, the action space may be considered as including infinite actions. For the server, the server needs to determine, based on an observed value of the state of the parameter optimization environment, an action executed by the server, for example, an action like adjusting the hyperparameter to a specific value, so that positive feedback obtained by the server from the parameter optimization environment is as high as possible, that is, performance of a neural network obtained through training after the hyperparameter is adjusted is as high as possible.

The following describes a procedure of the method provided in this application based on the application scenario.

The method provided in this application may be divided into a training phase and an inference phase. The training phase is a phase of training a generative flow model, and the inference phase is a phase of predicting a next action based on a current state via the trained generative flow model. The training phase and the inference phase may be deployed in a same device, or may be deployed in different devices. For example, the training phase may be deployed on a cloud or a server, and the inference phase may be deployed on an intelligent terminal, for example, a mobile phone, a tablet, an intelligent vehicle, a robot, or a wearable device.

For ease of understanding, this application separately describes procedures in the training phase and the inference phase.

1. Training phase

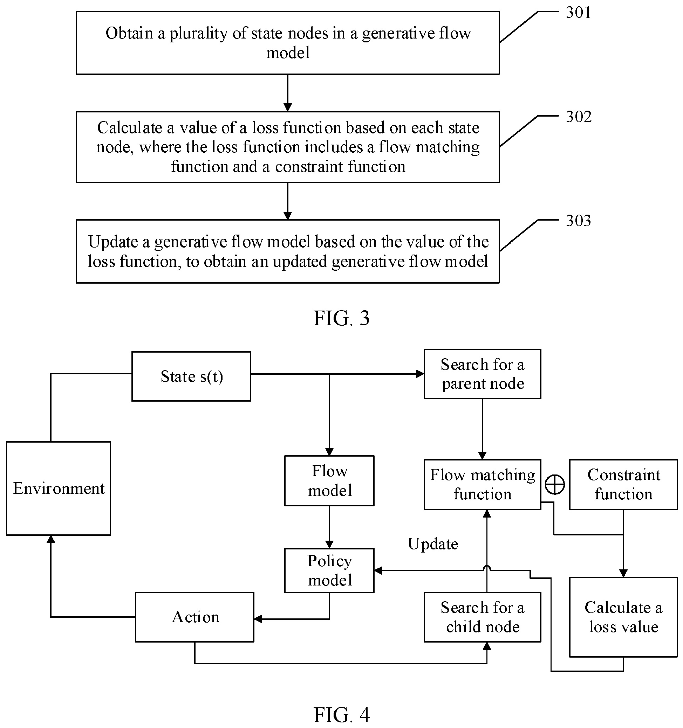

FIG. 3 is a schematic flowchart of a generative flow model training method according to this application. Details are as follows.

It should be noted that a model training process may be usually divided into a plurality of times of iteration or a plurality of times of execution. In this application, one iteration or execution process is used as an example for description. All steps mentioned below may be repeatedly performed. Details are not described below again.

301: Obtain a plurality of state nodes in a generative flow model.

In each iteration process, the generative flow model may be updated. Therefore, the generative flow model mentioned in this step may be a generative flow model updated in previous iteration, and each state node has an input flow and an output flow.

Generally, a node has one or more parent nodes, an input flow is a flow input by the one or more parent nodes to a current state node, the current state node may also have one or more child nodes, and an output flow is a flow output by the current node to the one or more child nodes. The output flow may be used to calculate a probability that each action in one or more actions is selected when the current node selects a next action from the one or more actions.

In addition, if the current state node is connected to a plurality of child nodes, a flow transmitted between the current state node and one of the child nodes may be referred to as an edge flow or a subflow. That is, a flow between a pair of state nodes may be referred to as an edge flow or a subflow.

In addition, in a training phase, probability distribution of each action in a case in which the generative flow model selects a next action based on each state node may be selected via a policy network. For example, refer to the reinforcement learning process described in FIG. 1. One time of iteration may be understood as interaction between an agent and an environment. In each time of iteration, state information fed back by the environment in previous iteration is used as an input of the agent, or is used as an input of the generative flow model. An output flow of each state node in current iteration is output based on the probability distribution output via the policy network. The output flow may be understood as a probability flow, and may be used to determine a probability that the current state node selects each to-be-selected action.

302: Calculate a value of a loss function based on each state node, where the loss function includes a flow matching function and a constraint function.

The flow matching function may be used to calculate a loss value based on a difference between the input flow and the output flow of each state node, and the constraint function may be calculated based on an evaluation value corresponding to each state node. The constraint function may be understood as a constraint item in the loss function, is particularly used for a cyclic part, and may be used to constrain and reduce a flow of the cyclic part. This can help constrain a reward of an overall flow transmitted on a cyclic path to be closer to 0, thereby reducing impact of a cycle in a generative flow network on an output result of the generative flow model. The cyclic path is a path that includes a cycle and that is formed between a plurality of state nodes, and an acyclic path is a path that does not include a cycle and that is formed between a plurality of nodes.

Optionally, in a process of updating the generative flow network, the probability distribution corresponding to the state nodes may be determined via the policy network, that is, a probability, corresponding to each to-be-selected action, in the case in which the generative flow model selects the next action based on each state node; and the value of the loss function is calculated based on the probability distribution. Therefore, in this implementation of this application, more reasonable probability distribution of the state nodes may be learned via the policy network.

In a possible implementation, possible probability distribution between state nodes may further be determined in a measure space, to facilitate measurement of an input/output flow between the state nodes.

Optionally, each state node may be mapped to a point in the measure space, and a measure value between the state nodes in the measure space may be output via the policy network, where the measure value may indicate density of the flow between the state nodes in the measure space. Then, probability distribution of the state nodes may be determined based on the measure value of the nodes. For example, a probability of transition between the state nodes may be determined based on the density of the edge flow formed between the states, to determine the probability distribution.

Optionally, at least one path between the plurality of state nodes, namely, a path for transition between the state nodes, may be specifically determined based on the calculated probability distribution. A start point and an end point of each path may be determined based on a task to be executed by the generative flow model. For example, an action whose probability value is greater than a preset value or an action with a largest probability value may be selected for each state node as the next action based on the probability distribution, to generate one or more transition paths. Then, the value of the loss function is calculated based on the at least one path and the input flow and the output flow of each state node.

For example, in a vehicle driving scenario, a current driving state of a vehicle may be determined as a state node, and a probability of each to-be-selected action in a case in which the current node selects a next action from one or more actions is determined based on the probability distribution. After the next action is selected, the vehicle may enter a next driving state, that is, a next state node.

In addition, the value of the loss function may further be calculated from a plurality of dimensions or a plurality of calculation manners, for example, based on a node flow matching loss, based on a trajectory balancing loss, or based on a loss of density of a node or a trajectory in a continuous space. Therefore, an adaptive loss function calculation manner can be selected based on training efficiency, training computational power, or the like that adapts to an actual application scenario. In this way, a generalization capability is very strong.

Optionally, when the loss function is calculated, weighted fusion may be performed on the flow matching function and the constraint function, or fusion may be performed by calculating divergence between the flow matching function and the constraint function. Specifically, an adaptive fusion algorithm may be selected based on an actual application scenario. This is not limited in this application. For example, to improve stability of the loss function and further improve stability of model training effect, fusion may be performed by calculating the divergence between the matching function and the constraint function, thereby improving stability of model training.

303: Update the generative flow model based on the value of the loss function, to obtain an updated generative flow model.

After the value of the loss function is calculated, the generative flow model may be reversely updated based on the value of the loss function, to obtain the updated generative flow model.

Specifically, in the method provided in this application, training may be performed in a reinforcement learning manner in the training phase. To be specific, during updating, the policy network may be updated, so that the policy network can output more accurate probability distribution, and the generative flow model is updated based on the probability distribution.

In an implementation of this application, in a phase of updating the generative flow model, in addition to the flow matching function that is used to perform matching based on the input/output flow of each node, the constraint function is further added to the loss function. This is equivalent to performing a regularization constraint on a size of a total edge flow, which helps weaken or terminate the cyclic part, thereby reducing the impact of the cycle on the output result of the model. Therefore, according to the method provided in this application, both an acyclic generative flow model and a cyclic generative flow model can be trained, so that faster convergence effect can be achieved, model performance can be improved, and the generalization capability is very strong.

The following describes the method provided in this application based on a more specific application scenario.

Specifically, a system architecture in a training phase may be shown in FIG. 4.

The system architecture is an architecture based on reinforcement learning. For a state generated by an environment, the policy network determines probability distribution, and then determines a next state node of a current state node based on the probability distribution, until a task ends, to form an acyclic graph or a cyclic graph.

A loss function may include a plurality of parts, for example, a flow matching function and a constraint function shown in FIG. 4. That is, a loss value may be calculated based on the flow matching function and the constraint function.

A flow matching loss is a loss set for a difference between an input flow and an output flow of a node. The constraint function is a constraint item set for a cyclic part, and may be calculated based on an evaluation value of an output flow of each state node. The evaluation value may include a reward value of the output flow of each state node in reinforcement learning, or may include a constraint value set for the output flow of each state node. This is equivalent to setting a regularization item in the loss function for the cyclic part, so as to perform regularization on an overall flow, so that a model training result tends to refer to an output result of a path of an acyclic part, and a size of a cyclic flow is reduced.

Specifically, in the method provided in this application, a process of calculating the loss function may be divided into a plurality of parts. For example, the probability distribution corresponding to the state nodes may be first calculated in the measure space, and then, the value of the loss function is calculated based on the probability distribution of the state nodes. For ease of understanding, embodiments of this application are divided into the following two parts: measure space projection and loss function calculation.

(1) Measure space projection

Generally, when a generative flow model runs, a transition path of each state node needs to be determined based on the probability distribution. In the training phase, the probability distribution may be generated via the policy network. To facilitate measurement of the output flow of each state node, the probability distribution may be calculated in the measure space, that is, transition of each state node may be more intuitively measured from a density dimension in the measure space.

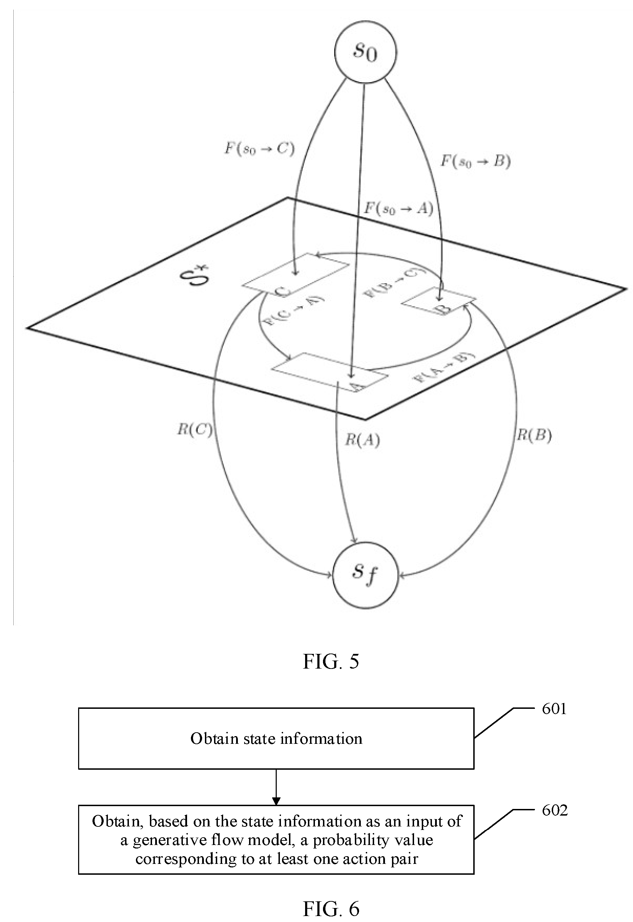

For example, state nodes projected into the measure space may be shown in FIG. 5, where $S_0$ is a start point, $S_f$ is an end point, and A, B, and C are intermediate nodes. Data transmitted through a node is a flow. For example, an output flow of $S_0$ includes three subflows shown in FIG. 5, namely, flows respectively transmitted to the node A, the node B, and the node C, which may also be referred to as edge flows.

In an implementation of this application, in the training phase, policy learning of the policy network may be performed in the measure space. A measure value of a flow transmitted between state nodes is output via the policy network. The measure value may represent a path formed between the state nodes or density of the flow in the measure space, and all values in the measure space are non-negative measures. Then, the probability distribution corresponding to the state nodes may be determined based on the measure value, that is, a probability that each action in an action space is selected when state transition is performed based on the state node. In an implementation of this application, the probability distribution may be determined in the measure space, and the measure value of the flow between the state nodes may be output via the policy network, so that a probability of the flow between the state nodes may be represented by the density in the measure space. For example, a flow with a larger density value indicates a higher probability of transiting to a corresponding state node after an action is selected.

For example, the measure value of transition between the states may be output via the policy network. In the measure space, the measure value of transition between the states may be represented by the density. Therefore, in the measure space, a possible transition path between the state nodes or a probability of possible transition between the states may be determined in this manner.

For ease of differentiation, an edge flow in a cyclic path may be referred to as a flow 0. In a reinforcement learning process, a reward of the environment for the flow 0 is usually 0. Generally, in a continuous measure space, a cycle is negligible for a path between nodes. For example, for a flow whose reward is close to 0, corresponding density is also low. Therefore, in the measure space, a cycle is weakened, to terminate a flow in the cycle subsequently.

Specifically, for example, the measure space is represented as $(S, S, F)$, where $F$ may be understood as a measure in the measure space, that is, the flow between the state nodes is the measure in the measure space. In the measure space, an output flow to A may be represented as $F_{out}(A \rightarrow S)$ and $S \in A$, and an input flow may be represented as $F_{out}(S \rightarrow A)$. A constraint (namely, a constraint corresponding to the constraint function) on each flow may be represented as $R = F(\cdot \rightarrow sf)$, and a flow matching constraint may be represented as $S * Fin = S * Fout$. An edge flow in the cycle is usually constrained to $R = 0$.

The probability of transition between the state nodes may be determined in a forward or backward Markov chain manner. For example, a forward probability may be represented as $\pi_f\ (x, A) = \frac{dF(\cdot \rightarrow A)}{dF(\cdot \rightarrow S)}$ where $F(\cdot \rightarrow A)$ represents a flow of transiting from a current state node to the node A, and $F(\cdot \rightarrow S)$ represents all output flows of the current node (or any state node). A backward probability may be represented as $\pi_b\ (x, A) = \frac{dF(A \rightarrow \cdot)}{dF(S \rightarrow \cdot)}$, where $F(A \rightarrow \cdot)$ represents a flow of transiting from the state node A to the current state node, and $F(S \rightarrow \cdot)$ represents all flows flowing to the current node.

(2) Loss function calculation

After the probability distribution of the state nodes is determined, the probability of state transition between the states may be determined. Therefore, at least one path formed during transition between the state nodes can be determined based on the probability distribution. The value of the loss function is calculated through matching based on the flow or the path formed between the nodes, so that updating can be performed subsequently based on the value of the loss function.

In an implementation of this application, in addition to the loss value calculated based on the input flow and the output flow of the node, a constraint item is further added to the loss function for constraining based on a loss value of the cyclic path. This is equivalent to constraining a size of the overall flow, so that overfitting in a training process can be avoided, and a parameter that needs to be optimized can be limited.

For example, the loss function may be represented as follows:

$$L\alpha(F) = L(F) + \alpha R(F)$$

Herein, $F$ represents a total flow between the state nodes, $R()$ is a constraint function, $L()$ is a flow matching function, and $\alpha$ is a weight coefficient.

Specifically, the constraint function may be determined based on a reward of the environment for a flow, or may be a penalty item set for a cyclic flow, or may be a value obtained by performing other extension calculation based on each flow.

For example, the constraint function is calculated based on a reward value. A higher reward of the environment for the flow corresponds to a smaller value of the constraint function, and a lower reward of the environment for the flow corresponds to a larger value of the constraint function. The penalty item is similar to the reward. A flow with a higher reward corresponds to a smaller penalty item, and a flow with a lower reward corresponds to a larger penalty item. It may be understood that, the environment usually provides a lower reward for a cyclic flow. Therefore, a larger loss value is set in the loss function, that is, a difference between an output path and an expected output path is large, which indicates a poor interaction result between a selected state transition path and the environment. Therefore, in this embodiment of this application, the cyclic path is constrained, so that a final output result is close to that of an acyclic path, to reduce impact of a cycle on the model output result.

Optionally, the constraint item may use a regularization constraint, for example, can constrain a norm of an edge flow matrix, and for example, can be represented as follows:

$$\mathcal{R} = \|F\|_2 = \sqrt{\sum_{(s,s')\in E} F'(s,s')^2}$$

In this way, a regularization constraint is performed on a size of an overall flow between state nodes $s$, so that a final flow converges to an acyclic flow.

Generally, to stabilize the loss value, $L(F_1 + F_0, \cdots, F_p + F_0) \geq L(F_1, \cdots, F_p)$ may be defined, where an edge flow $F0$ is defined as a subflow of a total edge flow $F$. If a loss value is not reduced for the flow 0, it indicates that a loss value calculated based on a flow $(F_1, \cdots, F_p)$ is stable. Therefore, when each $F_i$ includes the flow 0, a sufficient condition for stability of the loss value may be represented as $\partial_{F0} L(F_1, \cdots, F_p) \geq 0$.

Therefore, to stabilize the loss value, a weight coefficient $\alpha > 0$ may be set. For the flow 0, $\partial_{F0} R > 0$, and $\alpha_n \to 0^+$ is set. In addition, $(F_n)_{n \in N}$ is a sequence of edge flows during minimization of $L_{\alpha_n}$. If $F_n$ converges to $(F_n)_{n \in N}$, it indicates that $F_n$ is an acyclic flow, namely, a flow in an acyclic path.

Therefore, in this implementation of this application, the constraint item $R$ is set, so that the loss value of the flow 0 is not 0. In this way, even if a cycle exists in the path, a cyclic part can be constrained via the set constraint item, so that impact of the cycle on the model output result can be achieved, and the model can finally output an acyclic path.

Optionally, when the loss function is calculated, the loss value may be calculated in a plurality of manners, for example, based on node flow matching, based on trajectory balancing, or based on a density loss of a node or a trajectory in a continuous space. This may be specifically selected based on an actual application, and is not limited in this application. Calculating based on node flow matching is calculating based on a loss value between an input flow and an output flow of each state node; calculating based on trajectory balancing is calculating the loss value based on a trajectory formed by a plurality of edge flows between state nodes; and calculating based on density of the node or the trajectory in the continuous space is calculating the loss value based on the input flow and the output flow of the node in the continuous space, or calculating the loss value based on the trajectory formed by the plurality of edge flows between the state nodes.

Optionally, when the loss value is calculated, divergence between the flow matching function and the constraint function may be set in the loss function, to further improve stability of the loss function and accelerate model convergence.

For example, a manner of calculating the loss function based on the divergence may be represented as follows:

$$\triangle_{f,g,v}(\alpha, \beta) := \int_{x \in A} f(\alpha(x) - \beta(x)) g(\alpha(x), \beta(x)) dv(x)$$

To stabilize the loss value, constraints may be as follows: $f \geq 0$, $g \geq 1$, and $f(x) = 0 \Leftrightarrow x = 0$; $f$ and $g$ are continuous differentiable functions; and $\partial_{(1,1)} g > 0$.

In an implementation of this application, a training loss may be calculated based on generalized divergence, and a regularization constraint item may be used to constrain a cycle loss of the flow 0. The flow matching loss and the cycle loss of the flow 0 may be fused to obtain an overall loss value. Then, the policy network may be updated according to a back propagation algorithm, so that the policy network converges, and more accurate probability distribution of the state nodes during state transition is obtained.

The following describes some possible loss functions by using examples.

Example 1: Loss function based on node flow matching

A loss value is calculated based on a difference between the input flow and the output flow of each state node.

For function calculation based on generalized divergence, $f(x) = log(1 + \varepsilon |x|^{\alpha})$ and $g(x, y) = (1 + \eta(x + y))^{\beta}$ may be selected. In this case, the loss function may be represented as follows:

$$\mathcal{L} := \mathbb{E} \sum_{t=1}^{\tau} \left\{ \log \left[ 1 + \varepsilon |F_{\mathrm{in}}(s_t) - F_{\mathrm{out}}(s_t)|^{\alpha} \right] \right.$$

$$\left. \times (1 + \eta(F_{\mathrm{in}}(s_t) + F_{\mathrm{out}}(s_t)))^{\beta} \right\}$$

$\varepsilon, \eta, \alpha, and \beta$ are all greater than 0, $\tau$ represents a trajectory, $s_t$ represents one flow in the trajectory, $F_{in}$ represents an input flow of a state node, and $F_{out}$ represents an output flow of the state node. The trajectory includes a plurality of edge flows, and may be understood as a non-negative measure of a path from $s_0$ to $s_f$ in the measure space. For example, a trajectory flow may be represented by $F\otimes$, that is, a result of merging $F_{out}(s_0)$ with probability distribution obtained from $s_0$ to $s_f$ based on $\pi_f$.

Generally, during transition path sampling, if $R$ is not 0, a sampling time for the path $\tau$ is limited, and sampling distribution is usually positively correlated with R. For example, the sampling time may be represented as follows:

$$\mathbb{E}(\tau) \leq \frac{F_{out}(S^*)}{R(S^*)}, \text{ and } s_\tau \sim \frac{1}{R(S^*)} R.$$

In this way, the sampling duration for the transition path can be constrained, so that infinite sampling in a cycle can be avoided.

Therefore, in this example, the loss value may be calculated at a granularity of a node, to calculate the loss function based on generalized divergence. In addition, an overall flow of the path is constrained via a regularization constraint item in a unit of a node, so that a flow of a finally updated path converges to an acyclic flow, thereby implementing training of a generative flow model with a cyclic path.

Example 2: Loss function based on a trajectory balancing loss

For the function compared with the function based on node flow matching, Example 2 is equivalent to calculating a loss value at a granularity of a path. For example, the loss function may be represented as follows:

$$\mathcal{L} := \mathbb{E} \sum_{t=1}^{\tau} \left\{ \log \left[ 1 + \varepsilon \left| F^f(s_t \rightarrow s_{t+1}) - F^b(s_t \rightarrow s_{t+1}) \right|^{\alpha} \right] \right.$$

$$\left. \times (1 + \eta F_{\mathrm{out}}(s_t))^{\beta} \right\} .$$

When a forward flow and a backward flow are respectively parameterized according to a forward probability policy and a backward probability policy,

$$F^f(s_t \rightarrow s_{t+1}) = F_{\mathrm{out}}(s_t) \times \pi_f(s_t \rightarrow s_{t+1})$$

$$F^b(s_t \rightarrow s_{t+1}) = F_{\mathrm{out}}(s_{t+1}) \times \pi_b(s_t \rightarrow s_{t+1}).$$

Therefore, in this implementation of this application, the balancing loss may be calculated at a granularity of a trajectory, to calculate the loss value, so as to calculate the loss function based on generalized divergence. In addition, an overall flow of a path is constrained via a regularization constraint item in a unit of a flow in the path, so that a flow of a finally updated path converges to an acyclic flow, thereby implementing training of a generative flow model with a cyclic path.

Example 3: Loss function based on density of a node or trajectory in a continuous space

The continuous space may be the measure space, or may be another geometric space (for example, a Euclidean space) or the like. Specifically, an adaptive space may be selected based on an actual application scenario. This is not limited in this application.

For example, the loss function may be represented as follows:

$$\mathcal{L} := \mathbb{E} \sum_{t=1}^{\tau} \left\{ \log \left[ 1 + \varepsilon |f_i(s_t) - f_o(s_t)|^{\alpha} \right] \times (1 + \eta(f_i(s_t) + f_o(s_t)))^{\beta} \right\}.$$

In the continuous space, the input flow and the output flow in the foregoing two examples are replaced with the measurement density $f_i$ and $f_o$, where $s_t$ may represent a state node in a path or may represent a path.

Therefore, in the method provided in this application, the value of the loss function may be calculated from a plurality of dimensions, the stability of the loss function is improved based on the generalized divergence, and the size of the overall flow is constrained by adding the regularization constraint. This helps weaken impact of the cycle, and implements training of a cyclic generative flow model.

2. Inference phase

After model training, action prediction may be implemented via the generative flow model obtained in the training phase.

FIG. 6 is a schematic flowchart of an action prediction method according to this application.

601: Obtain state information.

In an inference phase, an agent may be understood as a device on which a generative flow model is deployed; or may be directly understood as an entity of a task to which the generative flow model is applied, and is a learner or a decision maker.

For example, when the generative flow model is applied to processing of an autonomous driving task, the agent is an autonomous driving vehicle on which the generative flow model is deployed. For another example, when the generative flow model is applied to processing of a robot control task, the agent is a robot on which the generative flow model is deployed. For example, when the generative flow model is applied to processing of a game character control task, the agent is a computer on which the generative flow model is deployed, and the computer is configured to control a game character.

As the agent executes different actions, the agent transits to different states. For example, in the autonomous driving task, after the autonomous driving vehicle executes an acceleration action, the autonomous driving vehicle moves to a different location, and is closer to an obstacle ahead. For another example, in the robot control task, after the robot rotates a mechanical arm, the mechanical arm is at a different location, and a distance between the mechanical arm and goods also changes.

In general, the state information is information indicating a state of the agent, and the state of the agent may be any state. For example, in the autonomous driving task, the state information may be information indicating a location of the autonomous driving vehicle serving as the agent in a map, a distance between the autonomous driving vehicle and another vehicle, a distance between the autonomous driving vehicle and the obstacle, and the like. For another example, in the robot control task, the state information may be information such as a location of the robot serving as the agent in a warehouse, a distance between the robot and another robot, and the distance between the mechanical arm of the robot and the goods.

Optionally, the state information is obtained based on a state sequence, and the state sequence indicates a plurality of ordered states. In the state sequence, in a previous state, an action is executed to transit from the previous state to a next state. In other words, the state sequence records a plurality of states of ordered transition of the agent.

Optionally, in the state sequence, a state in the plurality of states is obtained based on a previous state and an execution action corresponding to the previous state, the execution action corresponding to the previous state is selected from a plurality of actions sampled in an action space, and selection probabilities of the plurality of actions are obtained based on predicted values output via the generative flow model.

Specifically, the state sequence may be generated by an electronic device via the generative flow model. In a process of generating the state sequence, the electronic device first randomly samples K actions from an action space corresponding to a current state, and then inputs state information corresponding to the current state into the generative flow model, to obtain K output values of the generative flow model for the K actions in the current state, that is, predicted values of selecting the K actions, of the generative flow model in the current state. Second, a normalization operation is performed on the K output values output by the generative flow model, to calculate, probability values of respectively selecting the K actions in the current state, and further, one of the actions is selected based on the probability values of the K actions, to transit to a next state based on the current state and the selected action. By analogy, for each state, the electronic device samples a plurality of actions in a continuous action space, calculates a selection probability of each action in the plurality of actions via the generative flow model, and selects an action based on the selection probability of each action, to execute the action to obtain a next state. In this way, the electronic device continuously selects corresponding actions in different states, to continuously transit between states, so as to obtain the state sequence including the plurality of states.

602: Obtain, based on the state information as an input of the generative flow model, a probability value corresponding to at least one action pair.

In this embodiment, the generative flow model is used to predict, based on the input state information, the probability value of selecting each action. Simply, after first state information is input into the generative flow model, the generative flow model can predict, predicted values of respectively selecting given actions in a first state, and these predicted values can be converted into probability values used for selecting the actions.

For example, it is assumed that a plurality of first actions are respectively an action 1 to an action 5, and a plurality of first output values obtained by the generative flow model for the action 1 to the action 5 are respectively 1, 2, 4, 5, and 6. In this case, probability values of selecting the action 1 to the action by the agent in the first state may be 1/(1+2+4+5+6), 2/(1+2+4+5+6), 4/(1+2+4+5+6), 5/(1+2+4+5+6), and 6/(1+2+4+5+6).

The plurality of output values obtained by the generative flow model based on the input state information one-to-one correspond to the plurality of actions, that is, the plurality of output values respectively indicate predicted values of selecting the corresponding actions in the state. In addition, the plurality of actions corresponding to the plurality of output values are sampled in a continuous action space. The actions included in the continuous action space are continuous variables, that is, the plurality of actions may be a plurality of actions sampled within an action range. For example, in an autonomous driving scenario, it is assumed that an action space in which a plurality of actions are included is accelerating to 0 km/h to 100 km/h. In this case, a specific quantity of actions (namely, the plurality of actions) can be randomly sampled in the action space. For example, it is assumed that 5 actions are sampled. In this case, a plurality of sampled actions are respectively accelerating to 5 km/h, accelerating to 11 km/h, accelerating to 23 km/h, accelerating to 55 km/h, and accelerating to 88 km/h.

In this embodiment, a quantity of a plurality of output values is determined based on a quantity of a plurality of sampled actions. The quantity of the plurality of actions may be determined based on a precision requirement and a capability of the electronic device that trains the generative flow model. For example, the quantity of the plurality of actions is 1000, 5000, 10000, or another value. The quantity of the plurality of actions is not specifically limited in embodiments.

For a process of training the generative flow model, refer to the foregoing description of the training phase. Details are not described herein again.

Therefore, in this implementation of this application, the generative flow model can be applied based on both a cyclic graph and an acyclic graph. In this way, generalization is very strong.

In addition, this application further provides an action prediction method, which may be applied to both a training phase and an inference phase. Specifically, this application further provides a measure space-based action prediction method, which may be performed in a measure space.

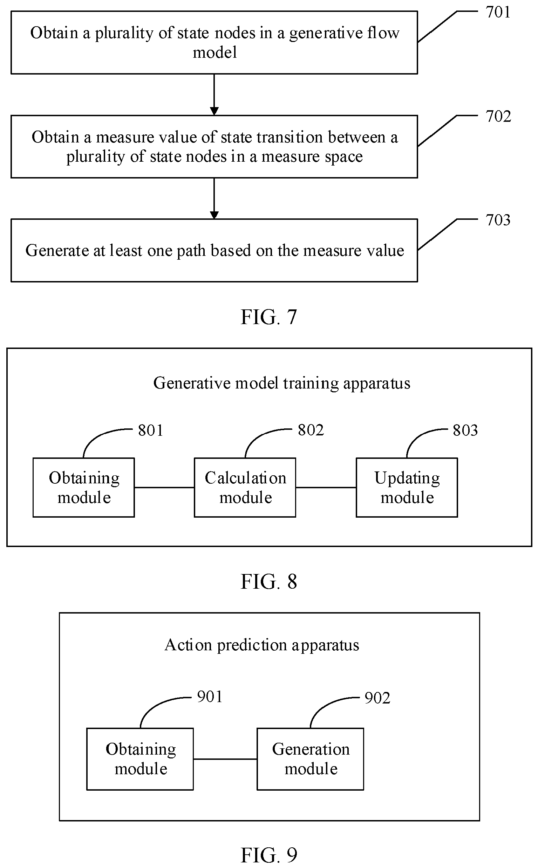

FIG. 7 is a schematic flowchart of another action prediction method according to this application.

701: Obtain a plurality of state nodes in a generative flow model.

For step 701, refer to the description of step 301. Details are not described herein again.

702: Obtain a measure value of state transition between the plurality of state nodes in the measure space.

Each state node may be mapped to a point in the measure space. The measure value may be used to calculate a probability, in the measure space, of selecting each action during state transition between the state nodes, or the measure value may indicate a probability, in the measure space, of selecting each action during state transition between the state nodes.

In the measure space, the measure value may indicate density, in the space, of a path formed during state transition between state nodes. Usually, an action space may be preset, and the action space may include a plurality of actions. For example, in an autonomous driving scenario, the action space may be set to a discrete action or a continuous action of accelerating to 0 km/h to 100 km/h, or the action space may be set to a discrete action or a continuous action of turning 0 degrees to 90 degrees. The measure value may be used to determine a probability of selecting each action.

703: Generate at least one path based on the measure value.

In the measure space, a size of a flow between nodes, that is, density, is related to a measure value of the nodes. For example, a larger measure value indicates higher density in the measure space. Therefore, at least one path, namely, a path during state transition between a plurality of state nodes, may be generated based on density of the path between the state nodes.

If the method provided in this embodiment of this application is applied to the training phase, probability distribution may be determined based on the measure value output via a policy network, where the probability distribution may be used to determine a probability that at least one to-be-selected action is selected when a next action is selected based on each state node in the plurality of state nodes, namely, a probability that each action is selected when state transition is performed based on each state node; and a loss is calculated in a subsequent phase, to update the generative flow model based on a result of the policy network.

If the method provided in this application is applied to the inference phase, at least one corresponding path may be output based on a specific task, and a subsequent action continues to be executed, to implement action prediction of state transition in the measure space.

Therefore, in this implementation of this application, a state transition path can be predicted in the measure space. In this way, the state transition path can be determined more accurately and efficiently based on the measurable space.

The foregoing describes the method procedure provided in this application. The following describes a structure of an apparatus for performing the method provided in this application.

FIG. 8 is a diagram of a structure of a generative model training apparatus according to this application. The apparatus includes:

an obtaining module 801, configured to obtain a plurality of state nodes in a generative flow model;

a calculation module 802, configured to obtain a value of a loss function based on the plurality of state nodes, where the value of the loss function includes a value obtained by fusing a value of a flow matching function and a value of a constraint function, the value of the flow matching function includes a value calculated based on an input flow and an output flow of each state node in the plurality of state nodes, the value of the constraint function includes a value calculated based on evaluation values corresponding to output flows of the plurality of state nodes, a value that is of the constraint function and that corresponds to an output flow in a cyclic path is different from a value that is of the constraint function and that corresponds to an output flow in an acyclic path, the cyclic path includes a path that forms a cycle between the state nodes, and the acyclic path is a path that does not include a cycle and that is formed between the state nodes; and

an updating module 803, configured to update the generative flow model based on the value of the loss function, to obtain an updated generative flow model.

In a possible implementation, the calculation module 802 is specifically configured to: determine, via a policy network, probability distribution corresponding to the plurality of state nodes, where the probability distribution is used to determine a probability that at least one to-be-selected action is selected when a next action is selected based on each state node; and calculate the value of the loss function based on the probability distribution and the plurality of state nodes.

In a possible implementation, the calculation module 802 is specifically configured to: output, via the policy network, a measure value, in a measure space, of a flow transmitted between the plurality of state nodes, where the measure value represents density, in the measure space, of a path formed between the plurality of state nodes; and determine the probability distribution based on the measure value between the plurality of state nodes.

In a possible implementation, the calculation module 802 is specifically configured to: determine at least one path between the plurality of state nodes based on the probability distribution, where a start point and an end point of the at least one path are determined based on a task to be executed by the generative flow model; and calculate the value of the loss function based on the at least one path and the input flow and the output flow of each state node.

In a possible implementation, the constraint function includes a function formed based on a norm of an edge flow matrix, the edge flow matrix is a matrix formed by an edge flow between intermediate state nodes in the plurality of state nodes, and the edge flow is a flow transmitted between a pair of state nodes.

In a possible implementation, the loss function includes a function formed based on divergence between the flow matching function and the constraint function.

In a possible implementation, the loss function includes a function based on a node flow matching loss, a trajectory balancing loss, a density loss of a node in a continuous space, or a density loss of a trajectory in a continuous space.

FIG. 9 is a diagram of a structure of an action prediction apparatus according to this application. The apparatus includes:

an obtaining module 901, configured to obtain state information, where the state information indicates a current state of an agent; and

a generation module 902, configured to obtain, based on the state information as an input of a generative flow model, a probability value corresponding to at least one action, where the probability value corresponding to the at least one action is used to determine an action executed by the agent.

The generative model is obtained through training by using the method in the training phase.

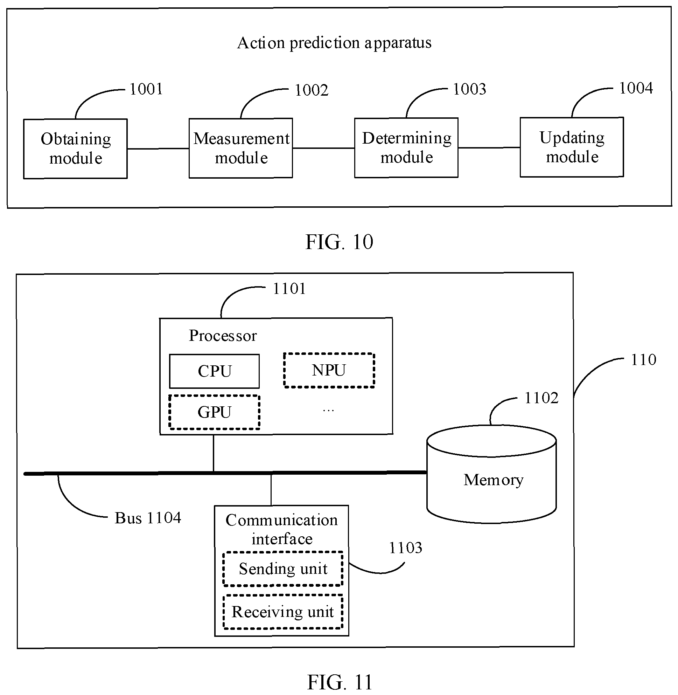

FIG. 10 is a diagram of a structure of an action prediction apparatus according to this application. The apparatus includes:

an obtaining module 1001, configured to obtain a plurality of state nodes in a generative flow model;

a measurement module 1002, configured to obtain a measure value of the plurality of state nodes, where the measure value indicates density, in a measure space, of a path formed between the plurality of state nodes during state transition, the measure value is used to determine probability distribution, and the probability distribution is used to determine a probability that at least one to-be-selected action is selected when a next action is selected based on each state node in the plurality of state nodes; and

a determining module 1003, configured to determine at least one path based on the measure value of the plurality of state nodes, where the at least one path includes a path formed between the plurality of state nodes during transition based on an action selected based on the probability distribution, and a start point and an end point of each path are determined based on a task to be executed by the generative flow model.

In a possible implementation, the apparatus further includes an updating module 1004, configured to: calculate a loss value based on the at least one path; and update the generative flow model based on the loss value, to obtain an updated generative flow model.

FIG. 11 is a diagram of a hardware structure of a generative flow model training apparatus 110 according to an embodiment of this application. The generative flow model training apparatus 110 may be configured to implement steps of the method in the training phase.

The generative flow model training apparatus 110 shown in FIG. 11 may include a processor 1101, a memory 1102, a communication interface 1103, and a bus 1104. The processor 1101, the memory 1102, and the communication interface 1103 may be connected to each other through a bus 1104.

The processor 1101 is a control center of the generative flow model training apparatus 110; and may be a general-purpose central processing unit (central processing unit, CPU), or may be another general-purpose processor or the like. The general-purpose processor may be a microprocessor, any conventional processor, or the like, for example, may specifically include a GPU, an NPU, or the like, which may be specifically adaptively set based on an actual application scenario.

In an example, the processor 1101 may include one or more CPUs, and may further include another processor, for example, a CPU, an NPU, or a GPU shown in FIG. 11.

The memory 1102 may be a read-only memory (read-only memory, ROM) or another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a magnetic disk storage medium or another magnetic storage device, or any other medium that can be used to carry or store expected program code in a form of instructions or a data structure and that can be accessed by a computer, but is not limited thereto.

In a possible implementation, the memory 1102 may be independent of the processor 1101. The memory 1102 may be connected to the processor 1101 through the bus 1104, and is configured to store data, instructions, or program code. When invoking and executing the instructions or the program code stored in the memory 1102, the processor 1101 can implement the method provided in embodiments of this application, for example, the generative flow model training method shown in the training phase.

In another possible implementation, the memory 1102 may alternatively be integrated with the processor 1101.

The communication interface 1103 is configured to connect the generative flow model training apparatus 110 to another device through a communication network. The communication network may be an Ethernet, a radio access network (radio access network, RAN), a wireless local area network (wireless local area network, WLAN), or the like. The communication interface 1103 may include a receiving unit configured to receive data and a sending unit configured to send data.

The bus 1104 may be an industry standard architecture (industry standard architecture, ISA) bus, a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of representation, only one bold line is used to represent the bus in FIG. 11, but this does not mean that there is only one bus or only one type of bus.

It should be noted that the structure shown in FIG. 11 does not constitute a limitation on the generative flow model training apparatus 110. In addition to the components shown in FIG. 11, the generative flow model training apparatus 110 may include more or fewer components than those shown in the figure, or combine some components, or have different component arrangements.

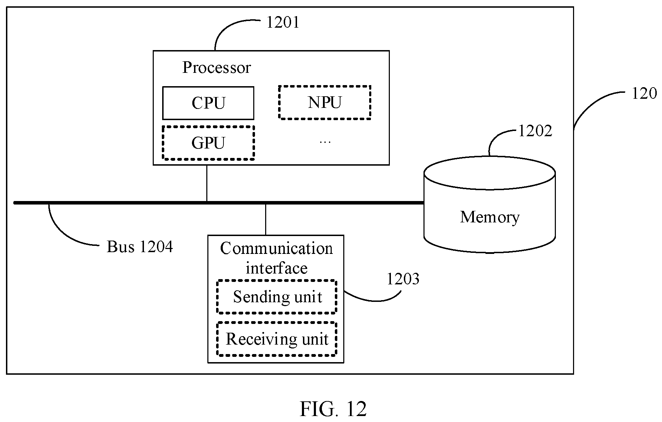

FIG. 12 is a diagram of a hardware structure of an action prediction apparatus 120 according to an embodiment of this application. The action prediction apparatus 120 may be configured to implement steps of the method in the inference phase.

The action prediction apparatus 120 shown in FIG. 12 may include a processor 1201, a memory 1202, a communication interface 1203, and a bus 1204. The processor 1201, the memory 1202, and the communication interface 1203 may be connected to each other through a bus 1204.

The processor 1201 is a control center of the action prediction apparatus 120; and may be a general-purpose central processing unit (central processing unit, CPU), or may be another general-purpose processor or the like. The general-purpose processor may be a microprocessor, any conventional processor, or the like, for example, may specifically include a GPU, an NPU, or the like, which may be specifically adaptively set based on an actual application scenario.

In an example, the processor 1201 may include one or more CPUs, and may further include another processor, for example, a CPU, an NPU, or a GPU shown in FIG. 12.

The memory 1202 may be a read-only memory (read-only memory, ROM) or another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a magnetic disk storage medium or another magnetic storage device, or any other medium that can be used to carry or store expected program code in a form of instructions or a data structure and that can be accessed by a computer, but is not limited thereto.

In a possible implementation, the memory 1202 may be independent of the processor 1201. The memory 1202 may be connected to the processor 1201 through the bus 1204, and is configured to store data, instructions, or program code. When invoking and executing the instructions or program code stored in the memory 1202, the processor 1201 can implement the method provided in embodiments of this application, for example, the action prediction method shown in the inference phase.

In another possible implementation, the memory 1202 may alternatively be integrated with the processor 1201.

The communication interface 1203 is configured to connect the action prediction apparatus 120 to another device through a communication network. The communication network may be an Ethernet, a radio access network (radio access network, RAN), a wireless local area network (wireless local area network, WLAN), or the like. The communication interface 1203 may include a receiving unit configured to receive data and a sending unit configured to send data.

The bus 1204 may be an industry standard architecture (industry standard architecture, ISA) bus, a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of representation, only one bold line is used to represent the bus in FIG. 12, but this does not mean that there is only one bus or only one type of bus.

It should be noted that the structure shown in FIG. 12 does not constitute a limitation on the action prediction apparatus 120. In addition to the components shown in FIG. 12, the action prediction apparatus 120 may include more or fewer components than those shown in the figure, or combine some components, or have different component arrangements.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any function that can be performed by a computer program can be easily implemented by corresponding hardware. Moreover, a specific hardware structure used to implement a same function may be in various forms, for example, in a form of an analog circuit, a digital circuit, or a dedicated circuit. However, as for this application, a software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a read-only memory (read-only memory, ROM), a random access memory (random access memory, RAM), a magnetic disk, or an optical disc of a computer, and includes several instructions for instructing a data quantization apparatus (which may be a personal computer, a server, a network device, or the like) to perform the methods described in embodiments of this application.

All or a part of the foregoing embodiments may be implemented by software, hardware, firmware, or any combination thereof. When the software is used for implementation, all or a part of embodiments may be implemented in a form of a computer program product.

An embodiment of this application further provides a computer-readable storage medium. The computer-readable storage medium stores a program used for training a model or executing an inference task. When the program is run on a computer, the computer is enabled to perform all or a part of the steps in the methods described in embodiments shown in FIG. 4 to FIG. 12.

An embodiment of this application further provides a digital processing chip. A circuit and one or more interfaces that are configured to implement the processor or a function of the processor are integrated into the digital processing chip. When a memory is integrated into the digital processing chip, the digital processing chip may complete the method steps in any one or more embodiments in the foregoing embodiments. When a memory is not integrated into the digital processing chip, the digital processing chip may be connected to an external memory through a communication interface. The digital processing chip implements the method steps in any one or more embodiments in the foregoing embodiments based on program code stored in the external memory.

An embodiment of this application further provides a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

The target perceptron apparatus or the target perceptron apparatus provided in embodiments of this application may be a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in the server performs the methods described in the embodiments shown in FIG. 4 to FIG. 7. Optionally, the storage unit is a storage unit in the chip, for example, a register or a cache. Alternatively, the storage unit may be a storage unit, for example, a read-only memory (read-only memory, ROM), another type of static storage device that can store static information and instructions, or a random access memory (random access memory, RAM), in a wireless access device but outside the chip.

Specifically, the processing unit or the processor may be a central processing unit (central processing unit, CPU), a neural-network processing unit (neural-network processing unit, NPU), a graphics processing unit (graphics processing unit, GPU), a digital signal processor (digital signal processor, DSP), an application-specific integrated circuit (application-specific integrated circuit, ASIC), a field programmable gate array (field programmable gate array, FPGA), another programmable logic device, a discrete gate, a transistor logic device, a discrete hardware component, or the like. A general-purpose processor may be a microprocessor, any conventional processor, or the like.

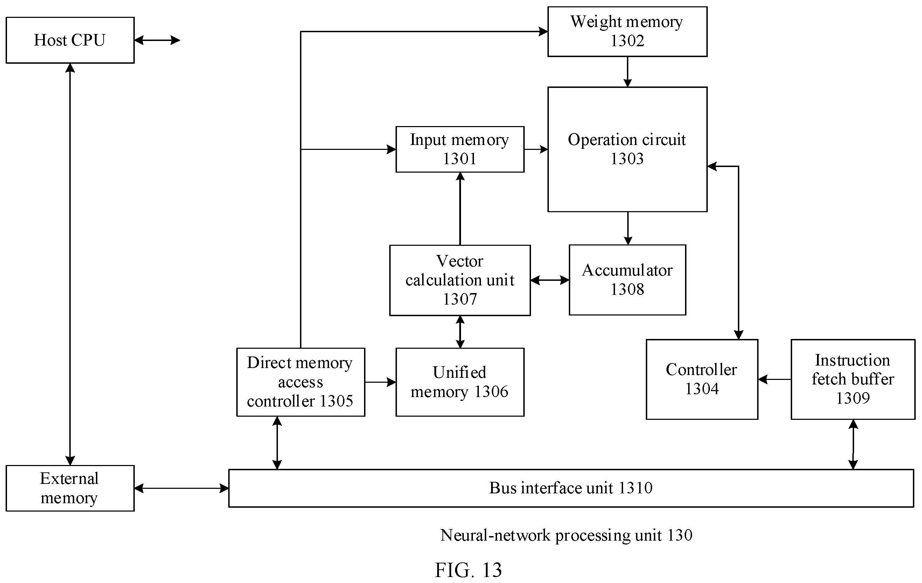

For example, FIG. 13 is a diagram of a structure of a chip according to an embodiment of this application. The chip may be represented as a neural-network processing unit NPU 130. The NPU 130 is mounted to a host CPU (Host CPU) as a coprocessor, and the host CPU allocates a task. A core part of the NPU is an operation circuit 1303, and a controller 1304 controls the operation circuit 1303 to extract matrix data in a memory and perform a multiplication operation.

In some implementations, the operation circuit 1303 internally includes a plurality of processing units (process engine, PE). In some implementations, the operation circuit 1303 is a two-dimensional systolic array. The operation circuit 1303 may alternatively be a one-dimensional systolic array or another electronic circuit capable of performing mathematical operations such as multiplication and addition. In some implementations, the operation circuit 1303 is a general-purpose matrix processor.

For example, it is assumed that there is an input matrix A, a weight matrix B, and an output matrix C. The operation circuit fetches, from a weight memory 1302, data corresponding to the matrix B, and buffers the data on each PE in the operation circuit. The operation circuit fetches data of the matrix A from an input memory 1301 to perform a matrix operation on the matrix B, and stores an obtained partial result or an obtained final result of the matrix into an accumulator (accumulator) 1308.

A unified memory 1306 is configured to store input data and output data. The weight data is directly transferred to the weight memory 1302 via a direct memory access controller (direct memory access controller, DMAC) 1305. The input data is also transferred to the unified memory 1306 through the DMAC.

A bus interface unit (bus interface unit, BIU) 1310 is configured to interact with the DMAC and an instruction fetch buffer (instruction fetch buffer, IFB) 1309 through an AXI bus.

The bus interface unit (bus interface unit, BIU) 1310 is used by the instruction fetch buffer 1309 to obtain instructions from an external memory, and is further used by the direct memory access controller 1305 to obtain original data of the input matrix A or the weight matrix B from the external memory.

The DMAC is mainly configured to transfer input data in the external memory DDR to the unified memory 1306, transfer weight data to the weight memory 1302, or transfer input data to the input memory 1301.

A vector calculation unit 1307 includes a plurality of operation processing units; and if necessary, performs further processing such as vector multiplication, vector addition, an exponential operation, a logarithmic operation, or value comparison on an output of the operation circuit. The vector calculation unit is mainly configured to perform network calculation, such as batch normalization (batch normalization), pixel-level summation, and upsampling on a feature map, at a non-convolutional/fully connected layer in a neural network.

In some implementations, a processed vector output by the vector calculation unit 1307 can be stored into the unified memory 1306. For example, the vector calculation unit 1307 may apply a linear function or a nonlinear function to the output of the operation circuit 1303, for example, perform linear interpolation on a feature map extracted at the convolutional layer, for another example, add value vectors, to generate an activation value. In some implementations, the vector calculation unit 1307 generates a normalized value, a pixel-level summation value, or both. In some implementations, the processed output vector can be used as an activation input to the operation circuit 1303, for example, used in a subsequent layer in the neural network.

The instruction fetch buffer (instruction fetch buffer) 1309 connected to the controller 1304 is configured to store instructions used by the controller 1304.

The unified memory 1306, the input memory 1301, the weight memory 1302, and the instruction fetch buffer 1309 are all on-chip memories. The external memory is private to a hardware architecture of the NPU.

An operation at each layer in a recurrent neural network may be performed by the operation circuit 1303 or the vector calculation unit 1307.

The processor mentioned above may be a general-purpose central processing unit, a microprocessor, an ASIC, or one or more integrated circuits for controlling programs of the methods in FIG. 4 to FIG. 7.

In addition, it should be noted that the described apparatus embodiments are merely examples. The units described as separate parts may or may not be physically separate, and parts displayed as units may or may not be physical units, may be located at one location, or may be distributed on a plurality of network units. A part or all of the modules may be selected based on an actual requirement to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any function that can be performed by a computer program can be easily implemented by corresponding hardware. Moreover, a specific hardware structure used to implement a same function may be in various forms, for example, in a form of an analog circuit, a digital circuit, or a dedicated circuit. However, as for this application, a software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a read-only memory (read-only memory, ROM), a random access memory (random access memory, RAM), a magnetic disk, or an optical disc of a computer, and includes several instructions for instructing a computer device (which may be a personal computer, a server, a network device, or the like) to perform the methods described in embodiments of this application.

All or a part of the foregoing embodiments may be implemented by software, hardware, firmware, or any combination thereof. When the software is used for implementation, all or a part of embodiments may be implemented in a form of a computer program product.

The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

In the specification, claims, and accompanying drawings of this application, the terms "first", "second", and the like are intended to distinguish between similar objects but do not necessarily indicate a specific order or sequence. It should be understood that the data termed in such a way is interchangeable in proper circumstances so that embodiments described herein can be implemented in orders other than the order illustrated or described herein. The term "and/or" in this application describes only an association relationship between associated objects and represents that three relationships may exist. For example, A and/or B may represent the following three cases: Only A exists, both A and B exist, and only B exists. In addition, the character "/" in this specification generally represents an "or" relationship between the associated objects. In addition, terms "include", "have" and any other variants mean to cover non-exclusive inclusion, for example, a process, method, system, product, or device that includes a list of steps or modules is not necessarily limited to those steps or modules, but may include other steps or modules not expressly listed or inherent to such a process, method, product, or device. Names or numbers of steps in this application do not mean that the steps in the method procedure need to be performed in a time/logic sequence indicated by the names or numbers. An execution sequence of the steps in the procedure that have been named or numbered can be changed based on a technical objective to be achieved, provided that same or similar technical effect can be achieved. Division into the modules in this application is logic division, and may be other division during actual implementation. For example, a plurality of modules may be combined or integrated into another system, or some features may be ignored or may not be performed. In addition, the displayed or discussed mutual couplings or direct couplings or communication connections may be implemented through some ports. The indirect couplings or communication connections between the modules may be implemented in an electrical form or another similar form. This is not limited in this application. In addition, the modules or submodules described as separate parts may or may not be physically separate, may or may not be physical modules, or may be distributed on a plurality of circuit modules. A part or all of the modules may be selected based on an actual requirement to implement the objectives of the solutions of this application.

**Claims**

1. A generative flow model training method, wherein the method comprises:

   obtaining a plurality of state nodes in a generative flow model;
   obtaining a value of a loss function based on the plurality of state nodes, wherein the value of the loss function comprises a value obtained by fusing a value of a flow matching function and a value of a constraint function, the value of the flow matching function comprises a value calculated based on an input flow and an output flow of each state node in the plurality of state nodes, the value of the constraint function comprises a value calculated based on evaluation values corresponding to output flows of the plurality of state nodes, a value that is of the constraint function and that corresponds to an output flow of a state node in a cyclic path is different from a value that is of the constraint function and that corresponds to an output flow of a state node in an acyclic path, the cyclic path comprises a path that forms a cycle between the plurality of state nodes, and the acyclic path is a path that does not comprise a cycle and that is formed between the plurality of state nodes; and
   updating the generative flow model based on the value of the loss function, to obtain an updated generative flow model.

2. The method according to claim 1, wherein obtaining the value of the loss function based on the plurality of state nodes comprises:

   determining, via a policy network, probability distribution corresponding to the plurality of state nodes, wherein the probability distribution is used to determine a probability that at least one to-be-selected action is selected when a next action is selected based on each state node; and
   calculating the value of the loss function based on the probability distribution and the plurality of state nodes.

3. The method according to claim 2, wherein determining, via the policy network, the probability distribution corresponding to the plurality of state nodes comprises:

   outputting, via the policy network, a measure value, in a measure space, of a flow transmitted between the plurality of state nodes, wherein the measure value represents density, in the measure space, of the flow transmitted between the plurality of state nodes; and
   determining the probability distribution based on the measure value between the plurality of state nodes.

4. The method according to claim 3, wherein calculating the value of the loss function based on the probability distribution and the plurality of state nodes comprises:

   determining at least one path between the plurality of state nodes based on the probability distribution, wherein a start point and an end point of the at least one path are determined based on a task to be executed by the generative flow model; and

calculating the value of the loss function based on the at least one path and the input flow and the output flow of each state node.

5. The method according to any one of claims 1 to 4, wherein the constraint function comprises a function formed based on a norm of an edge flow matrix, the edge flow matrix is a matrix formed by an edge flow between intermediate state nodes in the plurality of state nodes, and the edge flow is a flow transmitted between any pair of nodes in the plurality of state nodes.

6. The method according to any one of claims 1 to 5, wherein
the loss function comprises a function formed based on divergence between the flow matching function and the constraint function.

7. The method according to any one of claims 1 to 6, wherein
the loss function comprises a function based on a node flow matching loss, a trajectory balancing loss, a density loss of a node in a continuous space, or a density loss of a trajectory in a continuous space.

8. An action prediction method, comprising:

obtaining state information, wherein the state information indicates a current state of an agent; and
obtaining, based on the state information as an input of a generative flow model, a probability value corresponding to at least one action, wherein the probability value corresponding to the at least one action is used to determine an action executed by the agent, wherein
the generative flow model is obtained through training by using the method according to any one of claims 1 to 7.

9. An action prediction method, comprising:

obtaining a plurality of state nodes in a generative flow model;
obtaining a measure value of the plurality of state nodes, wherein the measure value indicates density, in a measure space, of a path formed between the plurality of state nodes during state transition, the measure value is used to determine probability distribution, and the probability distribution is used to determine a probability that at least one to-be-selected action is selected when a next action is selected based on each state node in the plurality of state nodes; and
generating at least one path based on the measure value of the plurality of state nodes, wherein the at least one path comprises a path formed between the plurality of state nodes during transition based on an action selected based on the probability distribution, and a start point and an end point of the at least one path are determined based on a task to be executed by the generative flow model.

10. The method according to claim 9, wherein the method further comprises:

calculating a loss value based on the at least one path; and
updating the generative flow model based on the loss value, to obtain an updated generative flow model.

11. A generative flow model training apparatus, wherein the apparatus comprises:

an obtaining module, configured to obtain a plurality of state nodes in a generative flow model;
a calculation module, configured to obtain a value of a loss function based on the plurality of state nodes, wherein the value of the loss function comprises a value obtained by fusing a value of a flow matching function and a value of a constraint function, the value of the flow matching function comprises a value calculated based on an input flow and an output flow of each state node in the plurality of state nodes, the value of the constraint function comprises a value calculated based on evaluation values corresponding to output flows of the plurality of state nodes, a value that is of the constraint function and that corresponds to an output flow of a state node in a cyclic path is different from a value that is of the constraint function and that corresponds to an output flow of a state node in an acyclic path, the cyclic path comprises a path that forms a cycle between the plurality of state nodes, and the acyclic path is a path that does not comprise a cycle and that is formed between the plurality of state nodes; and
an updating module, configured to update the generative flow model based on the value of the loss function, to obtain an updated generative flow model.

12. The apparatus according to claim 11, wherein the calculation module is specifically configured to:

determine, via a policy network, probability distribution corresponding to the plurality of state nodes, wherein the probability distribution is used to determine a probability that at least one to-be-selected action is selected when a next action is selected based on each state node; and
calculate the value of the loss function based on the probability distribution and the plurality of state nodes.

13. The apparatus according to claim 12, wherein the calculation module is specifically configured to:

output, via the policy network, a measure value, in a measure space, of a flow transmitted between the plurality of state nodes, wherein the measure value represents density, in the measure space, of the flow transmitted between the plurality of state nodes; and
determine the probability distribution based on the measure value between the plurality of state nodes.

14. The apparatus according to claim 13, wherein the calculation module is specifically configured to:

determine at least one path between the plurality of state nodes based on the probability distribution, wherein a start point and an end point of the at least one path are determined based on a task to be executed by the generative flow model; and
calculate the value of the loss function based on the at least one path and the input flow and the output flow of each state node.

15. The apparatus according to any one of claims 11 to 14, wherein the constraint function comprises a function formed based on a norm of an edge flow matrix, the edge flow matrix is a matrix formed by an edge flow between intermediate state nodes in the plurality of state nodes, and the edge flow is a flow transmitted between any pair of nodes in the plurality of state nodes.

16. The apparatus according to any one of claims 11 to 15, wherein the loss function comprises a function formed based on divergence between the flow matching function and the constraint function.

17. The apparatus according to any one of claims 11 to 16, wherein the loss function comprises a function based on a node flow matching loss, a trajectory balancing loss, a density loss of a node in a continuous space, or a density loss of a trajectory of a node in a continuous space.

18. An action prediction apparatus, comprising:

an obtaining module, configured to obtain state information, wherein the state information indicates a current state of an agent; and
a generation module, configured to obtain, based on the state information as an input of a generative flow model, a probability value corresponding to at least one action, wherein the probability value corresponding to the at least one action is used to determine an action executed by the agent, wherein
the generative model is obtained through training by using the method according to any one of claims 1 to 7.

19. An action prediction apparatus, comprising:

an obtaining module, configured to obtain a plurality of state nodes in a generative flow model;
a measurement module, configured to obtain a measure value of the plurality of state nodes, wherein the measure value indicates density, in a measure space, of a path formed between the plurality of state nodes during state transition, the measure value is used to determine probability distribution, and the probability distribution is used to determine a probability that at least one to-be-selected action is selected when a next action is selected based on each state node in the plurality of state nodes; and
a determining module, configured to determine at least one path based on the measure value of the plurality of state nodes, wherein the at least one path comprises a path formed between the plurality of state nodes during transition based on an action selected based on the probability distribution, and a start point and an end point of the at least one path are determined based on a task to be executed by the generative flow model.

20. The apparatus according to claim 19, wherein the apparatus further comprises an updating module, configured to:

calculate a loss value based on the at least one path; and
update the generative flow model based on the loss value, to obtain an updated generative flow model.

21. A generative flow model training apparatus, comprising a memory and a processor, wherein the memory stores code, the processor is configured to execute the code, and when the code is executed, the apparatus performs the method according to any one of claims 1 to 7.

22. A generative flow model training apparatus, comprising a memory and a processor, wherein the memory stores code, the processor is configured to execute the code, and when the code is executed, the apparatus performs the method according to any one of claims 8 to 10.

23. A computer storage medium, wherein the computer storage medium stores instructions, and when the instructions are executed by a computer, the computer is enabled to implement the method according to any one of claims 1 to 10.

24. A computer program product, wherein the computer program product stores instructions, and when the instructions are executed by a computer, the computer is enabled to implement the method according to any one of claims 1 to 10.

State s(t+1)

Action a(t)

Decision model

Agent

Environment

Reward r(t)

State s(t)

FIG. 1

x5

S0 S1 S3 S5 S8 S9 x9

S2 S4 S6 S10 x10

S7

S11 x11

FIG. 2

Obtain a plurality of state nodes in a generative flow model ⎯ 301

Calculate a value of a loss function based on each state node, where the loss function includes a flow matching function and a constraint function ⎯ 302

Update a generative flow model based on the value of the loss function, to obtain an updated generative flow model ⎯ 303

FIG. 3

State s(t)

Search for a parent node

Environment

Flow model

Flow matching function ⊕ Constraint function

Policy model

Update

Action

Search for a child node

Calculate a loss value

FIG. 4

FIG. 5

FIG. 6

29

```
┌────────────────────────────────────────────────┐        701
│  Obtain a plurality of state nodes in a          │ ╱────
│  generative flow model                           │
└────────────────────────────────────────────────┘
                      │
                      ▼
┌────────────────────────────────────────────────┐        702
│  Obtain a measure value of state transition      │ ╱────
│  between a plurality of state nodes in a         │
│  measure space                                   │
└────────────────────────────────────────────────┘
                      │
                      ▼
┌────────────────────────────────────────────────┐        703
│  Generate at least one path based on the         │ ╱────
│  measure value                                   │
└────────────────────────────────────────────────┘
```

FIG. 7

```
┌──────────────────────────────────────────────────────────┐
│         Generative model training apparatus               │
│                                                            │
│      ╭─ 801            ╭─ 802            ╭─ 803            │
│  ┌──────────┐     ┌──────────┐     ┌──────────┐           │
│  │Obtaining │─────│Calculation│────│ Updating │           │
│  │ module   │     │ module    │    │ module   │           │
│  └──────────┘     └──────────┘     └──────────┘           │
└──────────────────────────────────────────────────────────┘
```

FIG. 8

```
┌──────────────────────────────────────────────────┐
│           Action prediction apparatus             │
│                                                    │
│        ╭─ 901                  ╭─ 902             │
│   ┌──────────┐           ┌──────────┐             │
│   │Obtaining │───────────│Generation│             │
│   │ module   │           │ module   │             │
│   └──────────┘           └──────────┘             │
└──────────────────────────────────────────────────┘
```

FIG. 9

Action prediction apparatus

1001
1002
1003
1004

Obtaining module

Measurement module

Determining module

Updating module

FIG. 10

1101

Processor

CPU

NPU

GPU

...

110

1102

Memory

Bus 1104

Communication interface

Sending unit

1103

Receiving unit

FIG. 11

FIG. 12

Host CPU ↔

Weight memory
1302

Input memory
1301

Operation circuit
1303

Vector
calculation unit
1307

Accumulator
1308

Direct memory
access
controller 1305

Unified
memory 1306

Controller
1304

Instruction
fetch buffer
1309

External
memory

Bus interface unit 1310

Neural-network processing unit 130

FIG. 13

## INTERNATIONAL SEARCH REPORT

| International application No. |
| --- |
| **PCT/CN2024/120544** |

**A. CLASSIFICATION OF SUBJECT MATTER**

G06N3/08(2023.01)i

According to International Patent Classification (IPC) or to both national classification and IPC

**B. FIELDS SEARCHED**

Minimum documentation searched (classification system followed by classification symbols)

IPC:G06N

Documentation searched other than minimum documentation to the extent that such documents are included in the fields searched

Electronic data base consulted during the international search (name of data base and, where practicable, search terms used)

CNABS: CNTXT; DWPI; VEN; USTXT; WOTXT; EPTXT; CNKI: 生成, 流模型, 状态, 节点, 损失, 函数, 匹配, 输入, 输出, 约束, 奖励, 环路, 更新, 动作, 预测, 概率, 智能体, generate, flow network, state, node, loss, function, match, input, output, constraint, reward, loop, update, action, prediction, probability, agent

**C. DOCUMENTS CONSIDERED TO BE RELEVANT**

| Category* | Citation of document, with indication, where appropriate, of the relevant passages | Relevant to claim No. |
| --- | --- | --- |
| PX | CN 117540784 A (HUAWEI TECHNOLOGIES CO., LTD.) 09 February 2024 (2024-02-09) description, paragraphs 110-229 | 1-24 |
| X | CN 115688876 A (HUAWEI TECHNOLOGIES CO., LTD.) 03 February 2023 (2023-02-03) description, paragraphs 99-192 | 9-10, 19-20, 22-24 |
| X | CN 115618065 A (HUAWEI TECHNOLOGIES CO., LTD.) 17 January 2023 (2023-01-17) description, paragraphs 216-309 | 9-10, 19-20, 22-24 |
| Y | CN 115688876 A (HUAWEI TECHNOLOGIES CO., LTD.) 03 February 2023 (2023-02-03) description, paragraphs 99-192 | 1-8, 11-18, 21 |
| Y | CN 115618065 A (HUAWEI TECHNOLOGIES CO., LTD.) 17 January 2023 (2023-01-17) description, paragraphs 216-309 | 1-8, 11-18, 21 |
| Y | CN 116669136 A (GUILIN UNIVERSITY OF ELECTRONIC TECHNOLOGY) 29 August 2023 (2023-08-29) description, paragraphs 90-114 | 1-8, 11-18, 21 |

☑ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **20 November 2024** | **14 December 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/120544**

| C. | DOCUMENTS CONSIDERED TO BE RELEVANT | |
|---|---|---|
| Category* | Citation of document, with indication, where appropriate, of the relevant passages | Relevant to claim No. |
| A | CN 115034379 A (HUAWEI TECHNOLOGIES CO., LTD.) 09 September 2022 (2022-09-09) <br> entire document | 1-24 |
| A | US 2022147876 A1 (UMNAI LIMITED) 12 May 2022 (2022-05-12) <br> entire document | 1-24 |

Form PCT/ISA/210 (second sheet) (July 2022)

**INTERNATIONAL SEARCH REPORT**
Information on patent family members

International application No.

**PCT/CN2024/120544**

| Patent document cited in search report | | | Publication date (day/month/year) | Patent family member(s) | | | Publication date (day/month/year) |
|---|---|---|---|---|---|---|---|
| CN | 117540784 | A | 09 February 2024 | None | | | |
| CN | 115688876 | A | 03 February 2023 | WO | 2024067115 | A1 | 04 April 2024 |
| CN | 115618065 | A | 17 January 2023 | None | | | |
| CN | 116669136 | A | 29 August 2023 | None | | | |
| CN | 115034379 | A | 09 September 2022 | WO | 2023217127 | A1 | 16 November 2023 |
| US | 2022147876 | A1 | 12 May 2022 | EP | 4244770 | A1 | 20 September 2023 |
| | | | | WO | 2022101452 | A1 | 19 May 2022 |
| | | | | US | 11455576 | B2 | 27 September 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311292420